# EUROPEAN PATENT APPLICATION

(11) **EP 4 610 785 A1**
(43) Date of publication of application: **03.09.2025**
(21) Application number: 23882509.5
(22) Date of filing: 18.10.2023
(51) Int. Cl.: G06F 3/01

(54) **INPUT DEVICE, CONTROL APPARATUS, CONTROL METHOD, INFORMATION PROCESSING APPARATUS, AND INFORMATION PROCESSING METHOD**

(30) Priority: 24.10.2022 US 202263418800 P
(71) Applicant: Sony Group Corporation, Tokyo 108-0075 (JP)
(72) Inventor: YONEDA, Masafumi, Tokyo 108-0075 (JP); NOKUO, Taichi, Tokyo 108-0075 (JP)
(74) Representative: D Young & Co LLP
(86) International application number: PCT/JP2023/037690
(87) International publication number: WO 2024/090304

(57) **Abstract**

The present technology relates to an input device, a control apparatus, a control method, an information processing apparatus, and an information processing method for improving operability of an input device used for an operation in cross reality (XR) or the like.

An input device includes: a ring portion into which a finger is inserted; an operation portion that is operable by the finger inserted into the ring portion in a first direction; and a holding portion that is held by a palm in a case where the operation portion is operated by the finger. The present technology can be applied to, for example, an XR system.

## Description

### TECHNICAL FIELD

The present technology relates to an input device, a control apparatus, a control method, an information processing apparatus, and an information processing method, and more particularly, to an input device, a control apparatus, a control method, an information processing apparatus, and an information processing method for improving operability of the input device used for an operation of a cross reality (XR) space or the like.

### BACKGROUND ART

Conventionally, a hand-held type input device is used for an operation of a virtual space (see, for example, Patent Document 1). Furthermore, conventionally, a pen type input device is used to indicate a position in a virtual space (see, for example, Patent Document 2).

### CITATION LIST

### PATENT DOCUMENT

Patent Document 1: Japanese Patent Application Laid-Open No. 2020-181320
Patent Document 2: WO 2019/220803 A

### SUMMARY OF THE INVENTION

### PROBLEMS TO BE SOLVED BY THE INVENTION

However, if a strap or the like is not provided, the hand-held type input device falls when the hand is released. Furthermore, for example, in a case where a button is provided in the pen type input device, there is a possibility that a button operation causes a pen tip to be shaken and a position indicated by the input device to be shifted.

The present technology has been made in view of such a situation, and an object is to improve operability of an input device used for operation of an XR space or the like.

### SOLUTIONS TO PROBLEMS

An input device according to a first aspect of the present technology includes: a ring portion into which a finger is inserted; an operation portion that is operable by the finger inserted into the ring portion in a first direction; and a holding portion that is held by a palm in a case where the operation portion is operated by the finger.

A control apparatus according to a second aspect of the present technology includes: a recognition unit that recognizes a position and an orientation of an input device including a ring portion into which a finger of a hand of a user is inserted, an operation portion that is operable by the finger inserted into the ring portion in a first direction, and a holding portion that is held by a palm of the hand in a case where the operation portion is operated by the finger; and an operation control unit that controls an operation by the input device on the basis of the position and the orientation of the input device.

A control method according to the second aspect of the present technology includes: recognizing a position and an orientation of an input device including a ring portion into which a finger of a hand of a user is inserted, an operation portion that is operable by the finger inserted into the ring portion in a first direction, and a holding portion that is held by a palm of the hand in a case where the operation portion is operated by the finger; and controlling an operation by the input device on the basis of the position and the orientation of the input device.

In an information processing apparatus according to a third aspect of the present technology, an operation input signal is input which is output from an input device including a ring portion into which a finger is inserted, an operation portion that is operable by the finger inserted into the ring portion, and a holding portion that is held by a palm in a case where the operation portion is operated by the finger, and display control information for controlling display of an XR space on the basis of the operation input signal is output.

An information processing apparatus according to a fourth aspect of the present technology includes: a control unit that receives input information indicating at least one of a state of a terminal apparatus that presents an XR space to a user, a state around the terminal apparatus, a state of the user, a behavior of the user, or an operation input to an input device used for an operation input of the XR space, executes an application on the basis of the input information, and outputs output information for controlling display of a virtual object including computer aided design (CAD) information in the XR space.

An information processing method according to the fourth aspect of the present technology includes, by an information processing apparatus, receiving input information indicating at least one of a state of a terminal apparatus that presents an XR space to a user, a state around the terminal apparatus, a state of the user, a behavior of the user, or an operation input to an input device used for an operation input of the XR space; executing an application on the basis of the input information; and outputting output information for controlling display of a virtual object including CAD information in the XR space.

An information processing apparatus according to a fifth aspect of the present technology includes: a control unit that executes an application for presenting an XR space to a user and outputs output information indicating a change or abnormality of a state of the application to a terminal apparatus that presents the XR space to the user or an input device used for an operation input of the XR space.

An information processing method according to the fifth aspect of the present technology includes, by an information processing apparatus, executing an application for presenting an XR space to a user; and outputting output information indicating a change or abnormality of a state of the application to a terminal apparatus that presents the XR space to the user or an input device used for an operation input of the XR space.

In the first aspect of the present technology, the operation portion is operated by the finger inserted into the ring portion, and the holding portion is held by the palm in a case where the operation portion is operated by the finger.

In the second aspect of the present technology, a position and an orientation of an input device are recognized, the input device including a ring portion into which a finger of a hand of a user is inserted, an operation portion that is operable by the finger inserted into the ring portion in a first direction, and a holding portion that is held by a palm of the hand in a case where the operation portion is operated by the finger, and an operation by the input device is controlled on the basis of the position and the orientation of the input device.

In the third aspect of the present technology, an operation input signal is input which is output from an input device including a ring portion into which a finger is inserted, an operation portion that is operable by the finger inserted into the ring portion, and a holding portion that is held by a palm in a case where the operation portion is operated by the finger, and display control information for controlling display of an XR space on the basis of the operation input signal is output.

In the fourth aspect of the present technology, input information is received which indicates at least one of a state of a terminal apparatus that presents an XR space to a user, a state around the terminal apparatus, a state of the user, a behavior of the user, or an operation input to an input device used for an operation input of the XR space, an application is executed on the basis of the input information, and output information for controlling display of a virtual object including computer aided design (CAD) information in the XR space is output.

In the fifth aspect of the present technology, an application for presenting an XR space to a user is executed, and output information indicating a change or abnormality of a state of the application is output to a terminal apparatus that presents the XR space to the user or an input device used for an operation input of the XR space.

### BRIEF DESCRIPTION OF DRAWINGS

Fig. 1 is a diagram illustrating an embodiment of an XR system to which the present technology is applied.
Fig. 2 is a diagram illustrating a display example of the XR system.
Fig. 3 is a diagram illustrating a display example of the XR system.
Fig. 4 is a block diagram illustrating a configuration example of an information processing apparatus and a terminal apparatus.
Fig. 5 is an external view illustrating a configuration example of a controller device.
Fig. 6 is a diagram illustrating a method of grasping the controller device.
Fig. 7 is a diagram illustrating a method of grasping the controller device.
Fig. 8 is a diagram illustrating a method of grasping the controller device.
Fig. 9 is a diagram illustrating an arrangement example of operation members of the controller device.
Fig. 10 is a diagram illustrating an arrangement example of markers of the controller device.
Fig. 11 is a diagram illustrating an example of how the markers appear on the controller device.
Fig. 12 is a diagram for explaining a method of recognizing a position and an orientation of the controller device.
Fig. 13 is a diagram illustrating an example of an internal configuration of the controller device.
Fig. 14 is a diagram illustrating an arrangement example of a tactile device of the controller device.
Fig. 15 is a flowchart for explaining operation member control processing executed by the XR system.
Fig. 16 is a diagram for explaining the operation member control processing executed by the XR system.
Fig. 17 is a diagram illustrating an example of a method of grasping the controller device.
Fig. 18 is a diagram illustrating an example of a method of grasping the controller device.
Fig. 19 is a diagram illustrating an example of a method of grasping the controller device.
Fig. 20 is a flowchart for explaining tactile feedback control processing executed by the XR system.
Fig. 21 is a diagram for explaining an example of tactile feedback.
Fig. 22 is a diagram for explaining an example of the tactile feedback.
Fig. 23 is a diagram for explaining an example of the tactile feedback.
Fig. 24 is a block diagram illustrating a configuration example of a computer.

### MODE FOR CARRYING OUT THE INVENTION

Hereinafter, modes for carrying out the present technology will be described. The description will be given in the following order.
1. Embodiment
**2.** Modifications
**3.** Others

### <<1. Embodiment>>

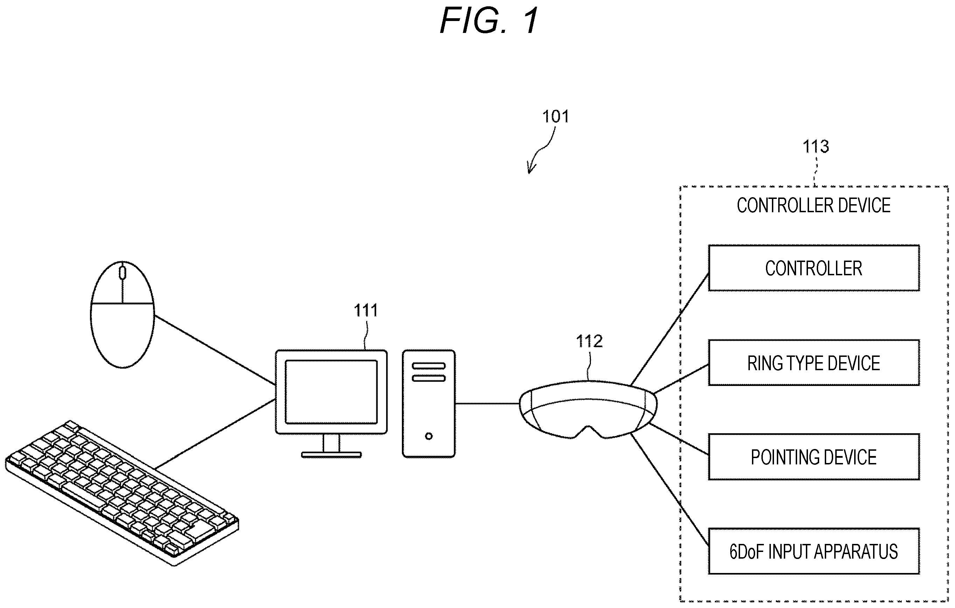

An embodiment of the present technology will be described with reference to Figs. 1 to 23.

### <Configuration example of XR system 101>

Fig. 1 illustrates a configuration example of a cross reality (XR) system 101 which is an embodiment of an information processing system to which the present technology is applied.

The XR system 101 is a system that realizes XR that is a technology of merging a real world with a virtual world, such as virtual reality (VR), augmented reality (AR), mixed reality (MR), and substitute reality (SR). The XR system 101 is a system that presents, to a user, a space (hereinafter, referred to as an XR space) obtained by merging a real space with a virtual space. For example, the XR system 101 can present a virtual object (hereinafter, referred to as a virtual object or a virtual entity) that is not real, such as a model created by computer aided design (CAD) (hereinafter, referred to as a CAD model), to the user as if the virtual object was present at that place.

The XR system 101 includes an information processing apparatus 111, a terminal apparatus 112, and a controller device 113.

The information processing apparatus 111 and the terminal apparatus 112 can communicate with each other wirelessly or by wire, and transmit and receive data to and from each other. The terminal apparatus 112 and the controller device 113 can communicate with each other wirelessly or by wire, and transmit and receive data to and from each other. The information processing apparatus 111 and the controller device 113 communicate with each other via the terminal apparatus 112, and transmit and receive data to and from each other.

For example, the information processing apparatus 111 can independently receive an operation by the user and present various types of information such as visual information and auditory information to the user.

Furthermore, for example, the information processing apparatus 111 executes a predetermined application (hereinafter, referred to as an XR application) to control the terminal apparatus 112 and control presentation of the XR space to the user by the terminal apparatus 112. For example, the information processing apparatus 111 executes the XR application to control output of various types of information such as visual information and auditory information in the terminal apparatus 112 and construct the XR space presented by the terminal apparatus 112.

Fig. 1 illustrates an example in which the information processing apparatus 111 includes a personal computer (PC) including an operation input unit including a mouse and a keyboard. For example, the information processing apparatus 111 may include another information processing apparatus such as a smartphone or a tablet terminal. For example, the information processing apparatus 111 may include a plurality of information processing apparatuses. For example, the information processing apparatus 111 may include a system constructed by cloud computing via a network.

The terminal apparatus 112 is an apparatus that presents the XR space to the user.

Fig. 1 illustrates an example in which the terminal apparatus 112 is a head mounted display apparatus that can be mounted on the head of the user and includes a head mounted display (HMD) that is an apparatus that presents the XR space to the user. More specifically, an example is illustrated in which the terminal apparatus 112 is a non-transmissive HMD that covers the user's field of view.

For example, the terminal apparatus 112 includes a video see-through type HMD that has an imaging function capable of imaging a real space on the basis of the viewpoint of the user and is capable of presenting, to the user, a synthesized image obtained by synthesizing a real image obtained by imaging the real space and an image of a virtual space (hereinafter, referred to as a virtual image) such as computer graphics (CG).

For example, the terminal apparatus 112 includes left and right imaging units respectively corresponding to the left and right eyes of the user, and left and right display units respectively corresponding to the left and right eyes of the user.

For example, the left and right imaging units constitute a stereo camera, and capture images (hereinafter, referred to as visual field images) in a line-of-sight direction of the user from a plurality of viewpoints corresponding to the left and right eyes of the user. That is, each of the left and right imaging units captures an image of an object (hereinafter, referred to as a real object or a real entity) in the real space viewed from the viewpoint of the user.

The left and right display units can display different images for the left and right eyes, respectively, and can present a three-dimensional virtual object by displaying images with parallax for the left and right eyes. For example, the left and right display units display left and right visual field images captured by the left and right imaging units, respectively.

Note that the terminal apparatus 112 may include, for example, another XR terminal apparatus such as AR glasses or a smartphone set with goggles for use. Furthermore, for example, a display apparatus such as a spatial reproduction display may be used instead of the terminal apparatus 112.

The controller device 113 is used for an operation and an input (hereinafter, referred to as an operation input) with respect to the XR space presented to the user by the terminal apparatus 112. For example, the user can perform various operations on the virtual object displayed by the terminal apparatus 112 by using the controller device 113.

For example, the controller device 113 detects at least one of an operation input by the user or a behavior of the user (for example, a gesture) by at least one of an operation member such as a button or a sensor. The controller device 113 transmits a signal (hereinafter, referred to as a controller signal) including at least one of an operation input signal indicating an operation input of the user or a behavior signal indicating a behavior of the user to the information processing apparatus 111 via the terminal apparatus 112.

Furthermore, for example, a controller device 113a includes a tactile device that presents a tactile stimulus such as vibration, and presents the tactile stimulus to the user under the control of the information processing apparatus 111 or the terminal apparatus 112.

The controller device 113 includes, for example, one or more types of input devices among a controller, a ring type input device, a pointing device, and a six degrees of freedom (6DoF) input apparatus.

The controller is, for example, an input device grasped by the user's hand. The controller may include, for example, an operation member such as a button operable by the user. For example, the user can perform a selection operation, a determination operation, a scroll operation, or the like on the virtual object displayed on the terminal apparatus 112 by pressing a button of the controller. Furthermore, the controller may include, for example, a touch sensor and a motion sensor.

Note that the controller is not limited to being grasped by the user's hand, and may be worn on a part of the user's body such as an elbow, an arm, a knee, an ankle, or a thigh, for example.

The ring type device is a ring type input device worn on the user's finger. The ring type device may include, for example, an operation member such as a button that is operable by the user. For example, the user can change the position and orientation of the virtual object (for example, a three-dimensional model) in the XR space by six degrees of freedom (6DoF) by operating the ring type device.

The pointing device is an input device capable of indicating an arbitrary position in the XR space. For example, the position and orientation of 6DoF of the pointing device are recognized by the information processing apparatus 111 via the terminal apparatus 112 by a tracking method such as a bright spot tracking method, a porcelain tracking method, or an ultrasonic tracking method.

The 6DoF input apparatus is, for example, an input device capable of operating 6DoF.

For example, the user can perform an operation input with the controller device 113 while viewing various objects (display objects) displayed on the information processing apparatus 111 or the terminal apparatus 112.

Note that the types and number of the controller devices 113 are not particularly limited. For example, as the controller device 113, an input device other than the above-described types may be used, or an input device obtained by combining a plurality of types of input devices may be used.

For example, the XR system 101 can be applied to various fields such as a manufacturing field and a medical field.

For example, the XR system 101 can perform product design support and assembly support in the manufacturing field. For example, in a product design stage, by using the XR system 101, the user can freely edit a three-dimensional object which is a virtual object or can grasp a design result and a design in advance before prototype production by comparison with the real world.

For example, the XR system 101 can support surgery and education in the medical field. For example, by using the XR system 101, the user can display the internal state of the body on the body surface of a patient, whereby grasping a surgical site in advance or performing training.

Note that, for example, in a case where the XR space is shared by a plurality of users, for example, in the XR system 101, the terminal apparatus 112 and the controller device 113 are provided for each user.

### <Display example of XR system 101>

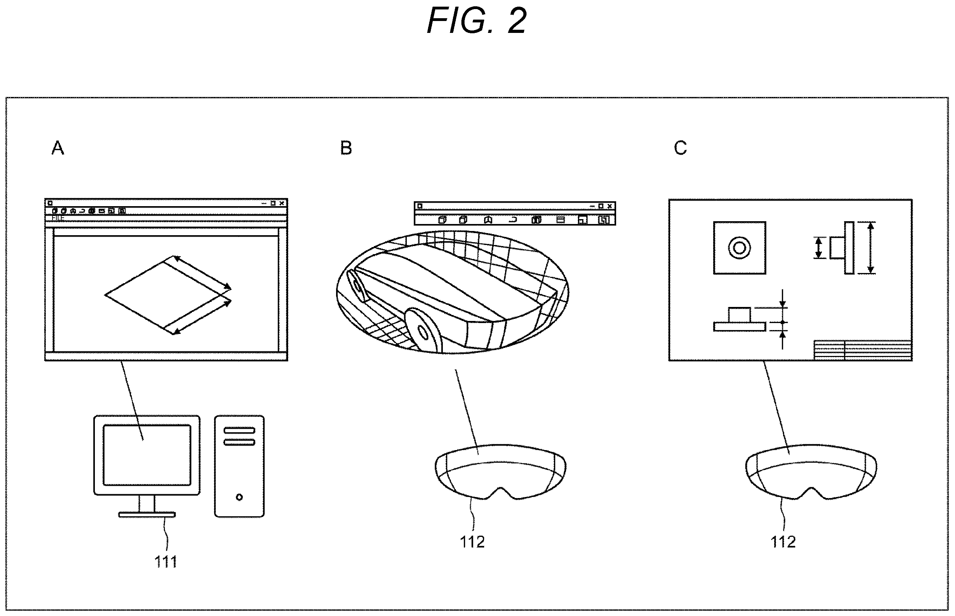

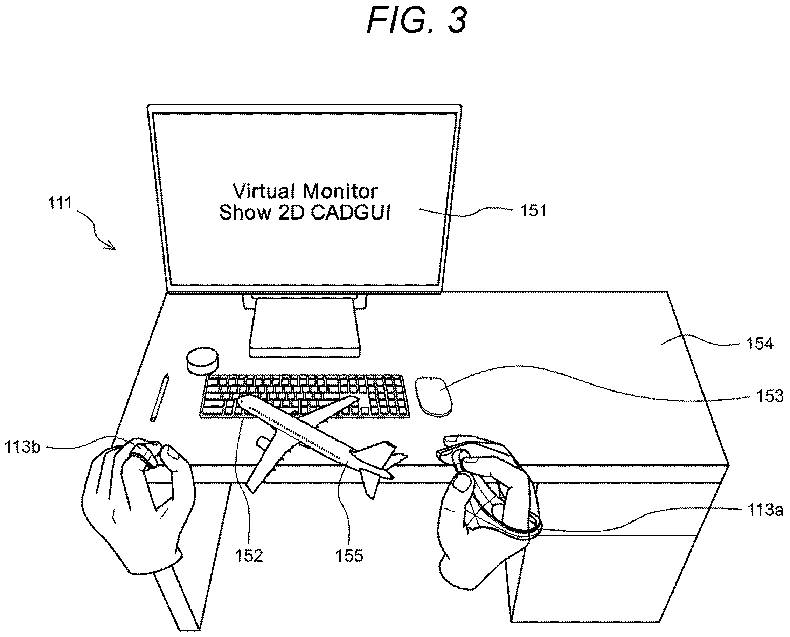

Here, a display example of display objects in the XR system 101 will be described with reference to Figs. 2 and 3.

Figs. 2 and 3 illustrate display examples of display objects in the XR system 101 in a case where a CAD model is created.

For example, as illustrated in A of Fig. 2, a two-dimensional CAD model is displayed by the information processing apparatus 111, and the user can edit the two-dimensional CAD model.

For example, as illustrated in B of Fig. 2, a three-dimensional CAD model is displayed by the terminal apparatus 112, and the user can edit the three-dimensional CAD model.

For example, as illustrated in C of Fig. 2, a two-dimensional object such as a design drawing or a specification is displayed by the terminal apparatus 112, and the user can confirm the design drawing, the specification, or the like.

Fig. 3 illustrates a display example of the XR space by the terminal apparatus 112.

A display 151, a keyboard 152, a mouse 153, and a desk 154 of the information processing apparatus 111 are displayed as a video see-through by a real image obtained by imaging a real space. On the other hand, a two-dimensional image by the terminal apparatus 112 is superimposed as a virtual monitor on the display 151. For example, a two-dimensional CAD model to be designed is displayed on the virtual monitor. For example, from the viewpoint of high accuracy of position detection and ease of position holding, the two-dimensional CAD model displayed by the virtual monitor is preferably operated by the keyboard 152 and the mouse 153.

Furthermore, in this example, the three-dimensional CAD model 155 to be designed is displayed in front of the display 151 by the terminal apparatus 112.

The CAD model 155 is operated by, for example, the controller device 113a grasped by the user's dominant hand (in this example, the right hand) and a controller device 113b, which is a ring type device worn on the index finger of the user's non-dominant hand (in this example, the left hand).

For example, the information processing apparatus 111 recognizes the positions, orientations, and behaviors of the hand grasping the controller device 113a and the user's hand wearing the controller device 113b by executing hand tracking on the basis of the image captured by the imaging unit included in the terminal apparatus 112. Furthermore, for example, the information processing apparatus 111 receives controller signals from the controller device 113a and the controller device 113b via the terminal apparatus 112, and recognizes operations on the CAD model 155 by the controller device 113a and the controller device 113b on the basis of the controller signals.

For example, the user can use the controller device 113a or the controller device 113b to grab, release, or move and rotate the CAD model 155 in 6DoF.

Note that, for example, in a case where the hand wearing the controller device 113a or the controller device 113b is moved without picking the CAD model 155, the CAD model 155 may not be moved, or the CAD model 155 may be moved as a virtual point is moved.

For example, the user can point at an arbitrary point, line, surface, or the like of the CAD model 155 by a ray (virtual light beam) or the like by using the controller device 113a. For example, the user can use the controller device 113a to perform line drawing to draw a line on the CAD model 155.

For example, the user can perform editing (for example, modeling, wiring, disassembly, and the like) on the CAD model 155 by using the controller device 113a or the controller device 113b.

### <Configuration examples of information processing apparatus 111 and terminal apparatus 112>

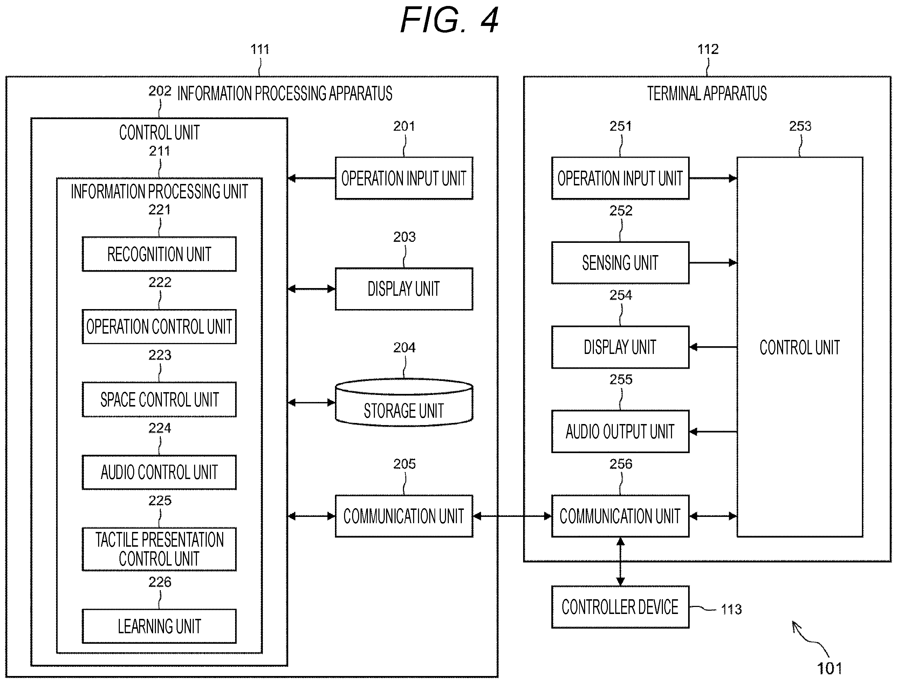

Fig. 4 is a block diagram illustrating a configuration example of functions of the information processing apparatus 111 and the terminal apparatus 112 of the XR system 101.

The information processing apparatus 111 includes an operation input unit 201, a control unit 202, a display unit 203, a storage unit 204, and a communication unit 205.

The operation input unit 201 includes, for example, an input device such as a keyboard and a mouse. The operation input unit 201 receives the user's operation input and supplies, to the control unit 202, an operation input signal indicating the content of the user's operation input.

The control unit 202 includes, for example, an electronic circuit such as a CPU and a microprocessor. Furthermore, the control unit 202 may include a ROM that stores programs to be used, calculation parameters, and the like, and a RAM that temporarily stores parameters and the like that change as appropriate.

For example, the control unit 202 functions as a calculation processing apparatus and a control apparatus, and controls the overall operation of the information processing apparatus 111 or executes various types of processing according to various programs.

For example, the control unit 202 implements an information processing unit 211 by executing the information processing apparatus 111 and an XR application capable of user experience in the XR space and editing of a virtual object. The information processing unit 211 includes a recognition unit 221, an operation control unit 222, a space control unit 223, an audio control unit 224, a tactile presentation control unit 225, and a learning unit 226. That is, the recognition unit 221, the operation control unit 222, the space control unit 223, the audio control unit 224, the tactile presentation control unit 225, and the learning unit 226 are implemented by the control unit 202 executing the XR application. Furthermore, input and output of each unit of the information processing unit 211, that is, the recognition unit 221, the operation control unit 222, the space control unit 223, the audio control unit 224, the tactile presentation control unit 225, and the learning unit 226 are executed via the XR application.

The recognition unit 221 recognizes the state of the information processing apparatus 111, the state of the terminal apparatus 112, the state around the terminal apparatus 112, the state of the controller device 113, the state of the user, the user operation, the state of the XR space, and the like, on the basis of at least one of an operation input signal from the operation input unit 201, information from the control unit 202, information from the display unit 203, information from the communication unit 205, sensing data transmitted from the terminal apparatus 112, a controller signal transmitted from the controller device 113, information from the operation control unit 222, or information from the space control unit 223.

The state of the information processing apparatus 111 to be recognized includes, for example, at least one of the state of each unit of the information processing apparatus 111, the state of each application such as the XR application, a communication state between the information processing apparatus 111 and another apparatus, or various types of setting information (for example, setting values of various setting items, and the like). The state of each unit of the information processing apparatus 111 includes, for example, at least one of the operation state, the presence or absence of abnormality, or the content of the abnormality of each unit. The state of each application includes, for example, at least one of the start and end, the operation state, the presence or absence of abnormality, or the content of the abnormality of each application. The communication state between the information processing apparatus 111 and another apparatus includes, for example, a communication state with the terminal apparatus 112 and a communication state with the controller device 113 via the terminal apparatus 112.

The state of the terminal apparatus 112 to be recognized includes, for example, at least one of the position, the orientation, or the behavior of the terminal apparatus 112 or various types of setting information (for example, setting values of various setting items, and the like). Note that, for example, in a case where the terminal apparatus 112 is worn by the user, the position, orientation, and behavior of the terminal apparatus 112 indirectly indicate the position, orientation, and behavior of the part of the user wearing the terminal apparatus 112.

The state around the terminal apparatus 112 to be recognized includes, for example, at least one of the type, the position, the orientation, the behavior, the size, the shape, the appearance, or the feature amount of a real object around the terminal apparatus 112 (user).

The state of the controller device 113 to be recognized includes, for example, at least one of the position, the orientation, or the behavior of the controller device 113 or various types of setting information (for example, setting values of various setting items, and the like).

The state of the user to be recognized includes, for example, at least one of the position, the orientation, the overall behavior, the body part's behavior, or the line-of-sight direction of the user.

The user operation to be recognized includes, for example, at least one of an operation input by the operation input unit 201, an operation input by the controller device 113, an operation input by the gesture of the user, or an operation input by a virtual tool or the like in the XR space.

The state of the XR space to be recognized includes, for example, at least one of the type, the position, the orientation, the behavior, the size, the shape, the appearance, or the feature amount of a virtual object in the XR space.

The recognition unit 221 supplies information regarding a recognition result to each unit of the information processing apparatus 111.

Furthermore, the recognition unit 221 transmits the information regarding the recognition result to the terminal apparatus 112 via the communication unit 205, or transmits the information to the controller device 113 via the communication unit 205 and the terminal apparatus 112. For example, in the case of detecting a change or abnormality in the state of the terminal apparatus 112 or the input device 113, the recognition unit 221 transmits information indicating the detected content to the terminal apparatus 112 via the communication unit 205 or transmits the information to the controller device 113 via the communication unit 205 and the terminal apparatus 112. For example, in the case of detecting a change (for example, start, stop, and the like) or abnormality in the state of an application such as the XR application, the recognition unit 221 transmits information indicating the detected content to the terminal apparatus 112 via the communication unit 205, or transmits the information to the controller device 113 via the communication unit 205 and the terminal apparatus 112.

Note that, for example, any method such as image recognition or object recognition can be used for the recognition processing of various recognition targets by the recognition unit 221.

Furthermore, for example, in a case where the XR space is shared by a plurality of users, the recognition unit 221 executes recognition processing for each user, for example. For example, the recognition unit 221 recognizes the state of the terminal apparatus 112 of each user, the state around the terminal apparatus 112 of each user, the state of the controller device 113 of each user, the state of each user, and the user operation of each user. The result of the recognition processing for each user may be shared between the users, for example, by being transmitted to the terminal apparatus 112 or the controller device 113 of each user.

The operation control unit 222 controls operation processing by the controller device 113 on the basis of at least one of the recognition result by the recognition unit 221 or the controller signal transmitted from the controller device 113.

For example, the operation control unit 222 controls operation processing by the controller device 113 on the basis of at least one of the position or orientation of the controller device 113 or the controller signal. For example, the operation control unit 222 controls enabling or disabling of each operation member included in the controller device 113, a function assigned to each operation member, an operation method of the function assigned to each operation member, and the like, on the basis of the mounting method, the grasping method, the use method, and the like of the controller device 113.

The operation control unit 222 supplies information regarding the control of the operation processing by the controller device 113 to each unit of the information processing apparatus 111.

The space control unit 223 controls presentation of a two-dimensional space or a three-dimensional space by the display unit 203 and presentation of the XR space by the terminal apparatus 112, on the basis of at least a part of the recognition result by the recognition unit 221.

For example, the space control unit 223 generates a display object to be displayed in the two-dimensional space or the three-dimensional space on the basis of at least a part of the recognition result by the recognition unit 221, and performs various calculations necessary for construction, display, and the like of the two-dimensional space or the three-dimensional space of the behavior of the display object or the like. The space control unit 223 generates display control information for controlling the display of the two-dimensional space or the three-dimensional space on the basis of the calculation result and supplies the display control information to the display unit 203, thereby controlling the display of the two-dimensional space or the three-dimensional space by the display unit 203. Note that the display control information may include, for example, information for using a two-dimensional space or a three-dimensional space (for example, an operation menu, guidance, a message, and the like), and information for notifying of the state of the information processing apparatus 111 (for example, setting information, remaining battery charge, error display, and the like).

For example, the space control unit 223 generates a virtual object to be displayed in the XR space on the basis of at least a part of the recognition result by the recognition unit 221, and performs various calculations necessary for construction, display, and the like of the XR space such as the behavior of the virtual object. The recognition result by the recognition unit 221 includes, for example, operation content for the controller device 113a recognized by the recognition unit 221, on the basis of the controller signal including an operation input signal from the controller device 113a and the like. The space control unit 223 generates display control information for controlling the display of the XR space on the basis of the calculation result and transmits the display control information to the terminal apparatus 112 via the communication unit 205, thereby controlling the display of the XR space by the terminal apparatus 112. Note that the display control information may include, for example, information for using the XR space (for example, an operation menu, guidance, a message, and the like) and information for notifying of the state of the XR system 101 (for example, setting information, remaining battery charge, error display, and the like).

The space control unit 223 supplies information regarding the two-dimensional space, the three-dimensional space, and the XR space to each unit of the information processing apparatus 111.

The audio control unit 224 controls the output of audio by the terminal apparatus 112 on the basis of at least one of the recognition result by the recognition unit 221 or the information from the space control unit 223. For example, the space control unit 223 generates audio control information for outputting audio in the terminal apparatus 112. The audio control information includes, for example, information regarding at least one of the type, the content, the frequency, the amplitude, or the waveform of audio to be output. The audio control unit 224 controls the output of the audio by the terminal apparatus 112 by transmitting the audio control information to the terminal apparatus 112 via the communication unit 205.

The tactile presentation control unit 225 controls presentation of a tactile stimulus to the user on the basis of at least one of the recognition result by the recognition unit 221 or the information from the space control unit 223. For example, the tactile presentation control unit 225 generates tactile control information for presenting a tactile stimulus in the controller device 113. The tactile control information includes, for example, information regarding at least one of the type, the pattern, the strength, or the length of a tactile sensation to be presented. The tactile presentation control unit 225 transmits the tactile control information to the controller device 113 via the communication unit 205 and the terminal apparatus 112, thereby controlling presentation of the tactile stimulus by the controller device 113.

The learning unit 226 executes learning processing related to processing of the XR system 101 on the basis of at least one of the recognition result by the recognition unit 221 or learning data given from the outside. For example, the learning unit 226 learns the user's preference, action pattern, and the like, and adjusts various types of processing and parameters of the XR system 101 on the basis of the learning result so as to appropriately correspond to the user's preference, action pattern, and the like. For example, the learning unit 226 learns a difference between the XR space and the real space, and adjusts design data and the like on the basis of the learning result so as to bring the characteristics, behavior, and the like of the virtual object in the XR space closer to those of the real object.

For example, the learning unit 226 causes the storage unit 204 to store information (for example, a learning model or the like) indicating the learning result.

Note that the control unit 202 may execute not only the XR application but also another application.

The storage unit 204 includes, for example, a read only memory (ROM) that stores programs, calculation parameters, and the like to be used for processing of the control unit 202, and a random access memory (RAM) that temporarily stores parameters and the like that change as appropriate.

The communication unit 205 communicates with an external apparatus to transmit and receive data. For example, the communication unit 205 communicates with the terminal apparatus 112 to transmit and receive data. For example, the communication unit 205 transmits the display control information, the audio control information, and the tactile control information to the terminal apparatus 112. For example, the communication unit 205 receives sensing data and a controller signal from the terminal apparatus 112.

The communication method of the communication unit 205 may be either wired or wireless, and for example, a wired LAN, a wireless LAN, Wi-Fi, Bluetooth, or the like is used. Furthermore, the communication unit 205 may support two or more types of communication methods.

The terminal apparatus 112 includes an operation input unit 251, a sensing unit 252, a control unit 253, a display unit 254, an audio output unit 255, and a learning unit 226.

The operation input unit 251 includes, for example, an operation input device such as a button. The operation input unit 201 receives the user's operation input and supplies, to the control unit 253, an operation input signal indicating the content of the user's operation input. For example, the operation input unit 251 receives an operation input such as turning on or off the power of the terminal apparatus 112 and adjusting the brightness of the display unit 254 by the user.

The sensing unit 252 includes various sensors for sensing the terminal apparatus 112, the periphery of the terminal apparatus 112, and the state of the user. For example, the sensing unit 252 includes a camera or a depth sensor for imaging the periphery of the terminal apparatus 112. For example, the sensing unit 252 includes a camera or a depth sensor for imaging both eyes of the user. For example, the sensing unit 252 includes an inertial measurement unit (IMU) for detecting acceleration, angular velocity, and the like of the terminal apparatus 112. For example, the sensing unit 252 includes a global navigation satellite system (GNSS) receiver for detecting the current position of the terminal apparatus 112 (user). The sensing unit 252 supplies, to the control unit 253, sensing data indicating a detection result of at least one or more of the sensors.

The control unit 253 includes, for example, an electronic circuit such as a CPU and a microprocessor. Furthermore, the control unit 253 may include a ROM that stores programs to be used, calculation parameters, and the like, and a RAM that temporarily stores parameters and the like that change as appropriate.

For example, the control unit 253 functions as a calculation processing apparatus and a control apparatus, and controls the overall operation of the terminal apparatus 112 and executes various types of processing on the basis of the operation input signal from the operation input unit 251, the sensing data from the sensing unit 252, the display control information and the audio control information from the information processing apparatus 111, the controller signal from the controller device 113, and the like according to various programs. For example, the control unit 253 controls display of the XR space or the like by the display unit 254 on the basis of the display control information. For example, the control unit 253 controls output of the audio by the audio output unit 255 on the basis of the audio control information.

The display unit 254 includes various display devices. For example, in a case where the terminal apparatus 112 is an HMD, the display unit 254 includes displays fixed to the left and right eyes of the user, and displays a left-eye image and a right-eye image. The display includes, for example, a display panel such as a liquid crystal display or an organic electro luminescence (EL) display, or a laser scanning display such as a retina direct projection display. Furthermore, the display unit 254 may include, for example, an imaging optical system that enlarges and projects a display screen to form an enlarged virtual image having a predetermined view angle on the user's pupil. For example, the display unit 254 displays the XR space including the virtual object under the control of the control unit 253.

The audio output unit 255 includes, for example, an audio output device such as a headphone, an earphone, or a speaker. The audio output unit 255 outputs an audio under the control of the control unit 253.

The communication unit 256 communicates with an external apparatus to transmit and receive data. For example, the communication unit 256 communicates with the terminal apparatus 112 and the controller device 113 to transmit and receive data. For example, the communication unit 256 transmits sensing data and a controller signal to the information processing apparatus 111. For example, the communication unit 256 receives the display control information, the audio control information, and the tactile control information from the information processing apparatus 111. For example, the communication unit 256 transmits the tactile control information to the controller device 113. For example, the communication unit 256 receives the controller signal from the controller device 113.

The communication method of the communication unit 256 may be either wired or wireless, and for example, a wired LAN, a wireless LAN, Wi-Fi, Bluetooth, or the like is used. Furthermore, the communication unit 256 may support two or more types of communication methods. Moreover, the communication unit 256 may perform communication between the information processing apparatus 111 and the controller device 113 by using different communication methods.

The following is an example of processing of the information processing apparatus 111 using the XR application.

For example, the communication unit 205 receives input information indicating at least one of the state of the terminal apparatus 112, the state around the terminal apparatus 112, the state of the user, the behavior of the user, or the operation input to the input device 113 from the terminal apparatus 112 or the controller device 113 via the terminal apparatus 112, and supplies the input information to the control unit 221. The control unit 221 executes the XR application on the basis of the input information, generates output information for controlling display of a virtual object including CAD information regarding CAD in the XR space, and outputs the output information to the terminal apparatus 112. The communication unit 205 transmits the output information to the terminal apparatus 112.

Furthermore, for example, the control unit 221 executes the XR application and outputs output information indicating a change or abnormality in the state of the XR application to the terminal apparatus 112 or the controller device 113. The communication unit 205 transmits the output information to the terminal apparatus 122 or to the controller device 113 via the terminal apparatus 112.

On the other hand, for example, the terminal apparatus 112 notifies of a change or abnormality in the state of the XR application by an image, a message, an audio, vibration, or the like on the basis of the output information. For example, the controller device 113 notifies of a change or abnormality in the state of the XR application by vibration or the like on the basis of the output information.

Note that, hereinafter, in a case where each unit of the information processing apparatus 111 communicates with the outside via the communication unit 205, the description of the communication unit 205 may be omitted. For example, in a case where the space control unit 223 of the information processing apparatus 111 communicates with the terminal apparatus 112 via the communication unit 205, it may be simply described that the space control unit 223 of the information processing apparatus 111 communicates with the terminal apparatus 112.

Hereinafter, in a case where each unit of the terminal apparatus 112 communicates with the outside via the communication unit 256, the description of the communication unit 256 may be omitted. For example, in a case where the control unit 253 of the terminal apparatus 112 communicates with the information processing apparatus 111 via the communication unit 256, it may be simply described that the control unit 253 of the terminal apparatus 112 communicates with the information processing apparatus 111.

For example, in the XR system 101, the space control unit 223 of the information processing apparatus 111 generates the display control information and transmits the display control information to the terminal apparatus 112 via the communication unit 205, and the control unit 253 of the terminal apparatus 112 receives the display control information via the communication unit 256 and controls the display unit 254 on the basis of the display control information. Hereinafter, the description of the series of processing may be simplified, and for example, description may be made such that the space control unit 223 of the information processing apparatus 111 controls the display unit 254 of the terminal apparatus 112.

For example, in the XR system 101, the audio control unit 224 of the information processing apparatus 111 generates the audio control information and transmits the audio control information to the terminal apparatus 112 via the communication unit 205, and the control unit 253 of the terminal apparatus 112 receives the audio control information via the communication unit 256 and controls the audio output unit 255 on the basis of the audio control information. Hereinafter, the description of the series of processing is simplified, and for example, description may be made such that the audio control unit 224 of the information processing apparatus 111 controls the audio output unit 255 of the terminal apparatus 112.

For example, in the XR system 101, the tactile presentation control unit 225 of the information processing apparatus 111 generates tactile control information and transmits the tactile control information to the controller device 113 via the communication unit 205 and the terminal apparatus 112, and the controller device 113 presents a tactile stimulus on the basis of the tactile control information. Hereinafter, the description of the series of processing is simplified, and for example, description may be made such that the tactile presentation control unit 225 of the information processing apparatus 111 controls the controller device 113 via the terminal apparatus 112.

### <Configuration example of controller device 113a>

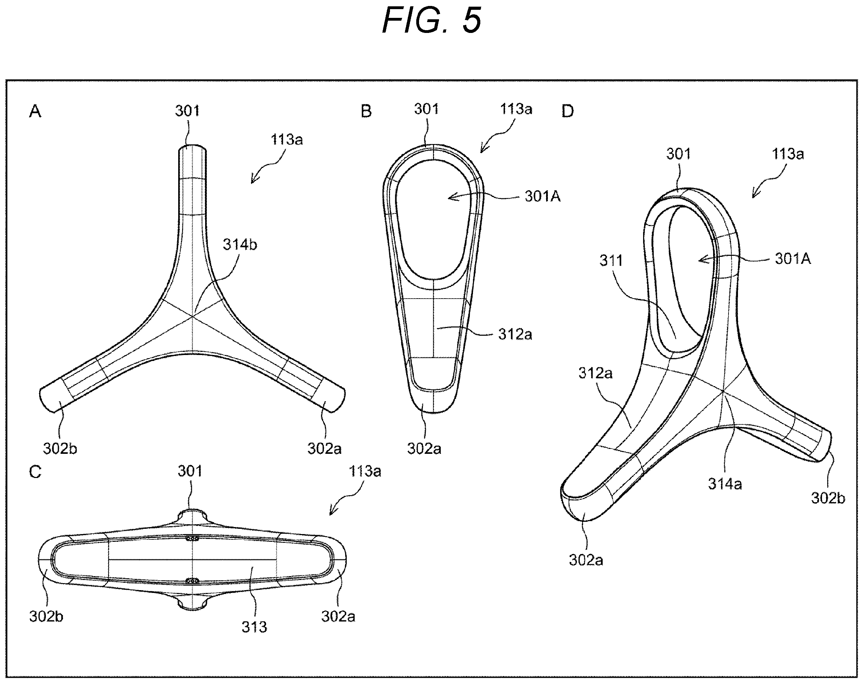

Next, a configuration example of the controller device 113a of Fig. 3 will be described with reference to Figs. 5 to 14.

Fig. 5 illustrates a configuration example of the appearance of the controller device 113a. A of Fig. 5 is a left side view of the controller device 113a. B of Fig. 5 is a front view of the controller device 113a. C of Fig. 5 is a bottom view of the controller device 113a. D of Fig. 5 is a perspective view of the controller device 113a as viewed from obliquely front right.

Note that hereinafter, an upward direction in A of Fig. 5 is defined as the upward direction of the controller device 113a, and a downward direction in A of Fig. 5 is defined as the downward direction of the controller device 113a. A right direction in A of Fig. 5 is defined as the front direction of the controller device 113a, and a left direction in A of Fig. 5 is defined as the rear direction of the controller device 113a.

The controller device 113a has a symmetrical shape when viewed from any of the front, rear, left, right, upper, and lower directions. Furthermore, in the controller device 113a, the shape of the front surface viewed from the front is similar to the shape of the rear surface viewed from the rear, and the shape of the right side surface viewed from the right direction is similar to the shape of the left side surface viewed from the left direction.

The controller device 113a is roughly divided into three parts of a ring portion 301, an operation portion 302a, and a holding portion 302b.

As illustrated in A of Fig. 5, the ring portion 301 extends upward from the vicinity of the center of gravity of a left side surface 314b. The operation portion 302a and the holding portion 302b have a symmetrical shape about the ring portion 301 when viewed from the direction of the side surface (for example, the left side surface 314b of the controller device 113a) of the ring portion 301. The operation portion 302a extends forward and obliquely downward from the vicinity of the center of gravity of the left side surface 314b (the vicinity of the lower end of the ring portion 301). The holding portion 302b extends rearward and obliquely downward from the vicinity of the center of gravity of the left side surface 314b (the vicinity of the lower end of the ring portion 301) in symmetry with the operation portion 302a. When the tip of the ring portion 301, the tip of the operation portion 302a, and the tip of the holding portion 302b are connected, an isosceles triangle having the tip of the ring portion 301 as a vertex is formed. An angle between the ring portion 301 and the operation portion 302a, an angle between the ring portion 301 and the holding portion 302b, and an angle between the operation portion 302a and the holding portion 302b are each about 120 degrees, and the above-described isosceles triangle is a substantially equilateral triangle.

The tip of the side surface of the ring portion 301 extends linearly, and the root extends in a curved shape. The tip of the side surface of the operation portion 302a extends linearly, and the root extends in a curved shape. The tip of the side surface of the holding portion 302b extends linearly, and the root extends in a curved shape. A boundary portion between the ring portion 301 and the operation portion 302a, a boundary portion between the ring portion 301 and the holding portion 302b, and a boundary portion between the operation portion 302a and the holding portion 302b are curved.

As illustrated in B of Fig. 5, a hole 301A penetrating in a front-rear direction is formed in the ring portion 301. The outer periphery of the ring portion 301 expands gently toward the tip, and the tip is curved. Similarly, the hole 301A extends gently toward the tip, and the tip and the end are curved.

As illustrated in B of Fig. 5, the operation portion 302a is gradually thinned toward the tip, and the tip is curved. An upper surface 312a of the operation portion 302a is inclined forward and obliquely downward. On the upper surface 312a of the operation portion 302a, a shallow groove curved in a lateral direction and extending in the front-rear direction is formed. The tip of the upper surface 312a of the operation portion 302a is slightly recessed with respect to the tip of the operation portion 302a. Therefore, the upper surface 312a of the operation portion 302a has a shape in which in a case where the user's finger is inserted into the hole 301A of the ring portion 301 in the front direction from the rear, the inserted finger can be easily placed.

The holding portion 302b has a similar shape to the operation portion 302a, and an upper surface 312b (not illustrated) having a similar shape to the upper surface 312a is formed.

As illustrated in C of Fig. 5, a bottom surface 313 curved in the front-rear direction is formed by the lower surface of the operation portion 302a and the lower surface of the holding portion 302b. A shallow groove curved in the lateral direction and extending in the front-rear direction is formed on the bottom surface 313.

A rubber-like material such as silicon or elastomer is used for an inner peripheral surface 311, the upper surface 312a, the upper surface 312b, and the bottom surface 313 of the controller device 113a, for example. For other parts of the controller device 113a, for example, an IR transmissive resin is used.

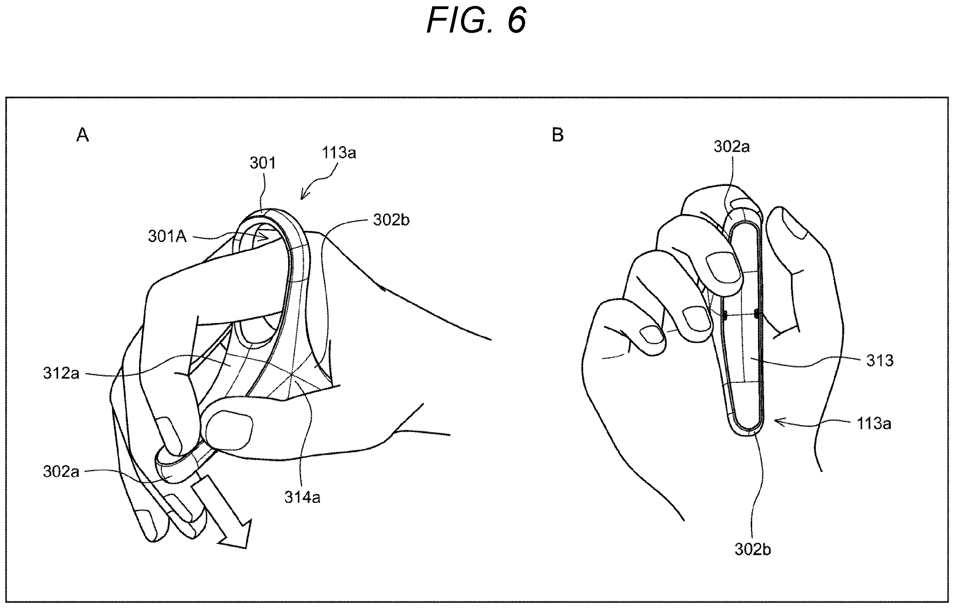

Figs. 6 to 8 illustrate examples of a method of grasping the controller device 113a.

For example, as illustrated in A of Fig. 6, the index finger of the right hand is inserted into the ring portion 301 in the front direction from the rear, the tip of the index finger is placed near the tip of the upper surface 312a of the operation portion 302a, and the operation portion 302a is operable by the index finger. Since the size of the hole 301A of the ring portion 301 has a margin with respect to the thickness of the index finger, the index finger is easily inserted. The tip of the thumb of the right hand is lightly placed near the tip of the side surface of the operation portion 302a, and the holding portion 302b is lightly gripped and held by the palm of the right hand.

For example, as indicated by an arrow in A of Fig. 6, in a case where the vicinity of the tip of the operation portion 302a is pressed downward by the index finger, the tip of the holding portion 302b abuts on the palm as illustrated in B of Fig. 6, whereby the controller device 113a is prevented from rotating in the pressing direction. Therefore, the vicinity of the tip of the operation portion 302a is prevented from shaking in the space, and the user can reliably press the vicinity of the tip of the operation portion 302a in a state where the direction of the tip of the operation portion 302a is stable.

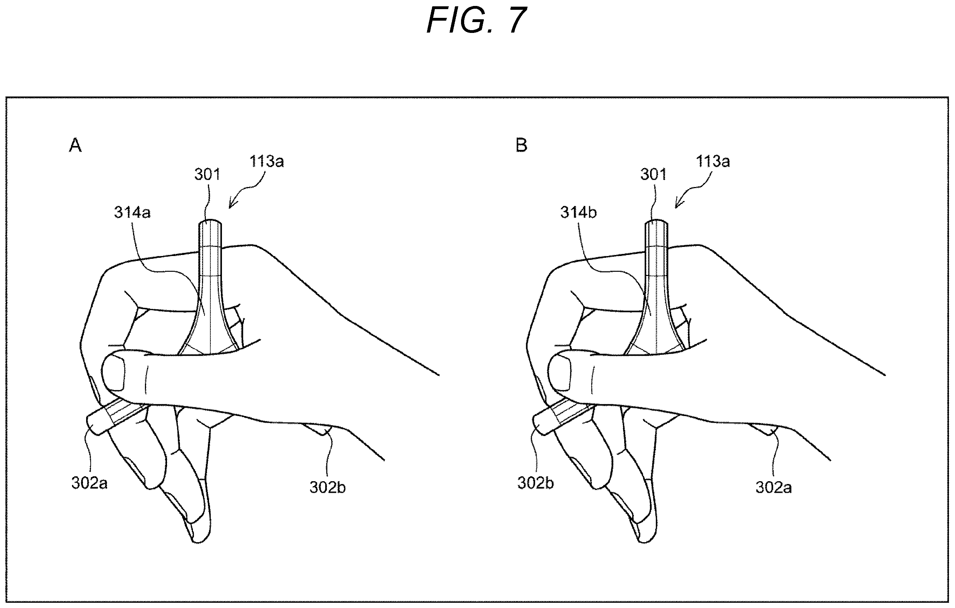

Furthermore, as described above, in the controller device 113a, the shape viewed from the front is similar to the shape viewed from the rear, and the shape viewed from the right direction is similar to the shape viewed from the left direction. Therefore, the user can hold the controller device 113a without worrying about the front and rear. That is, as illustrated in A of Fig. 7, the user can hold the controller device 113a such that the operation portion 302a faces the direction of the fingertip and a right side surface 314a faces the direction of the thumb. Furthermore, as illustrated in B of Fig. 7, the user can hold the controller device 113b such that the holding portion 302b faces the direction of the fingertip and the left side surface 314b faces the direction of the thumb.

Note that hereinafter, as illustrated in A of Fig. 7, grasping the controller device 113a such that the operation portion 302a faces the direction of the fingertip is referred to as grasping the controller device 113a in a forward direction. Hereinafter, as illustrated in B of Fig. 7, grasping the controller device 113a such that the holding portion 302b faces the direction of the fingertip is referred to as grasping the controller device 113a in a rearward direction.

In a case where the controller device 113a is grasped in the rearward direction, the roles of the operation portion 302a and the holding portion 302b are switched. That is, the holding portion 302b functions as an operation portion that is operable by the index finger of the right hand, and the operation portion 302a functions as a holding portion that is held by the palm of the right hand.

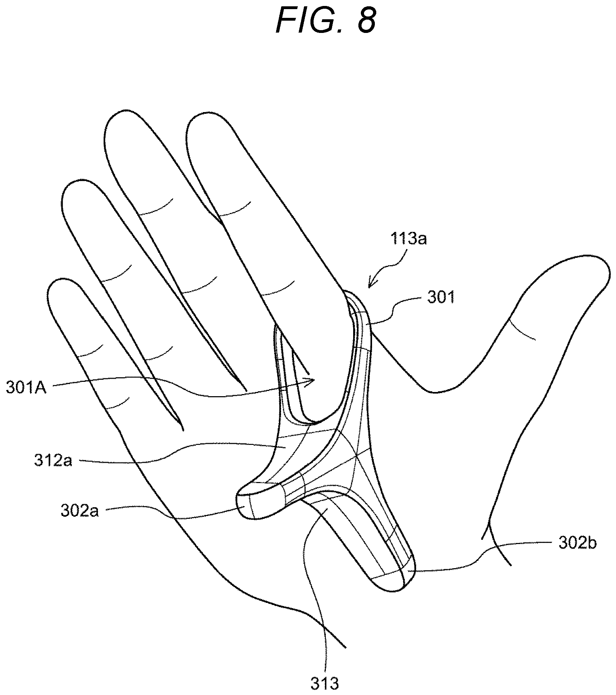

Furthermore, as illustrated in Fig. 8, even if the user releases the hand from the controller device 113a, the ring portion 301 is caught by the index finger, and the controller device 113a does not fall. Therefore, without providing a strap or the like, it is prevented that the user unexpectedly drops the controller device 113a.

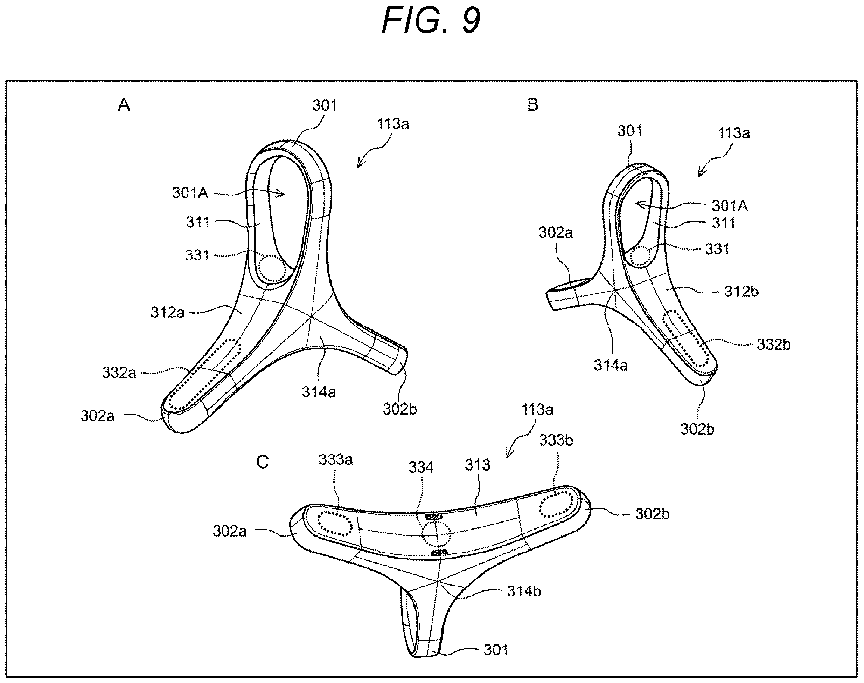

Fig. 9 illustrates an arrangement example of operation members of the controller device 113a. A of Fig. 9 is a perspective view of the controller device 113a as viewed from a right and obliquely upper direction. B of Fig. 9 is a perspective view of the controller device 113a as viewed from a left and obliquely upper direction. C of Fig. 9 is a perspective view of the controller device 113a as viewed from a rear and obliquely lower direction.

The operation members are arranged symmetrically about the ring portion 301 in the front-rear direction and the left-right direction of the controller device 113a.

For example, the operation member 331 is arranged at the lower end of the inner peripheral surface 311 (hole 301A) of the ring portion 301. For example, the user bends the index finger and operates the operation member 331 with the fingertip of the index finger.

An operation member 332a is arranged near the tip of the upper surface 312a of the operation portion 302a. An operation member 332b is arranged near the tip of the upper surface 312b of the holding portion 302b. For example, the user operates the operation member 332a or the operation member 332b with the fingertip of the index finger.

An operation member 333a and an operation member 333b are arranged near the front end and the rear end of the bottom surface 313, respectively. For example, the user operates the operation member 333a or the operation member 333b with the fingertip of the ring finger or the little finger.

The operation member 334 is arranged at the center of the bottom surface 313 in the front-rear direction. For example, the user operates the operation member 334 with the fingertip of the thumb, the ring finger, or the little finger.

For example, any type of operation member such as a button, a touch pad, or a joystick can be used as the operation member 331, the operation member 332a, the operation member 332b, the operation member 333a, the operation member 333b, and the operation member 334. However, the same type of operation member is used for the operation member 332a and the operation member 332b arranged at symmetrical positions about the ring portion 301. Similarly, the same type of operation member is used for the operation member 333a and the operation member 333b arranged at symmetrical positions about the ring portion 301.

Any function can be assigned to the operation member 331, the operation member 332a, the operation member 332b, the operation member 333a, the operation member 333b, and the operation member 334, for example. However, similar functions are assigned to the operation member 332a and the operation member 332b arranged at symmetrical positions about the ring portion 301. Similarly, similar functions are assigned to the operation member 333a and the operation member 333b arranged at symmetrical positions about the ring portion 301.

Specifically, for example, a function of calling a main menu screen is assigned to the operation member 331. For example, a function of selecting a virtual object is assigned to the operation member 332a and the operation member 332b. For example, functions other than the selection functions of the operation member 333a and the operation member 333b are assigned to the operation member 332a and the operation member 332b. For example, a function of calling a sub menu screen is assigned to the operation member 334.

Note that, for example, different functions may be assigned to the operation member 332a and the operation member 332b, and the functions of both may be switched depending on the direction in which the controller device 113a is held. Similarly, for example, different functions may be assigned to the operation member 333a and the operation member 333b, and the functions of both may be switched depending on the direction in which the controller device 113a is held.

As described above, the user can perform a similar operation regardless of whether the user grasps the controller device 113a in the forward direction or the rearward direction.

Note that although it is assumed that the index finger is inserted into the ring portion 301, for example, the middle finger or the ring finger may be inserted for use.

Note that hereinafter, in a case where it is not necessary to distinguish the operation member 332a and the operation member 332b from each other, they are simply referred to as the operation member 332. Hereinafter, in a case where it is not necessary to distinguish the operation member 333a and the operation member 333b from each other, they are simply referred to as the operation member 333.

### <Arrangement example of markers>

For example, a marker such as an IR light emitting element may be provided in the controller device 113a. Then, the recognition unit 221 of the information processing apparatus 111 may detect the marker of the controller device 113a on the basis of the image or the like sensed by the sensing unit 252 of the terminal apparatus 112, and recognize the relative position and orientation between the terminal apparatus 112 and the controller device 113 on the basis of the position of the detected marker.

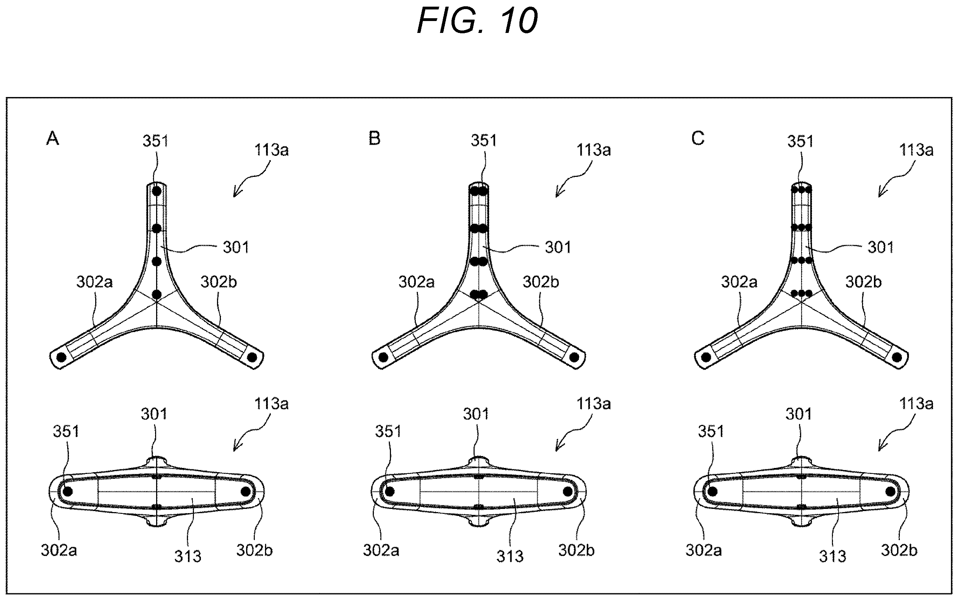

Fig. 10 illustrates an arrangement example of the markers 351 of the controller device 113a. Each marker 351 is indicated by a black circle.

For example, as illustrated in A of Fig. 10, the markers 351 are arranged in the vertical direction on the right side surface 314a and the left side surface 314b so as to surround the outer periphery of the ring portion 301. For example, the markers 351 are arranged near the tips of the both side surfaces of the operation portion 302a and near the tips of the both side surfaces of the holding portion 302b. For example, the marker 351 is arranged near the front end and the rear end of the bottom surface 313.

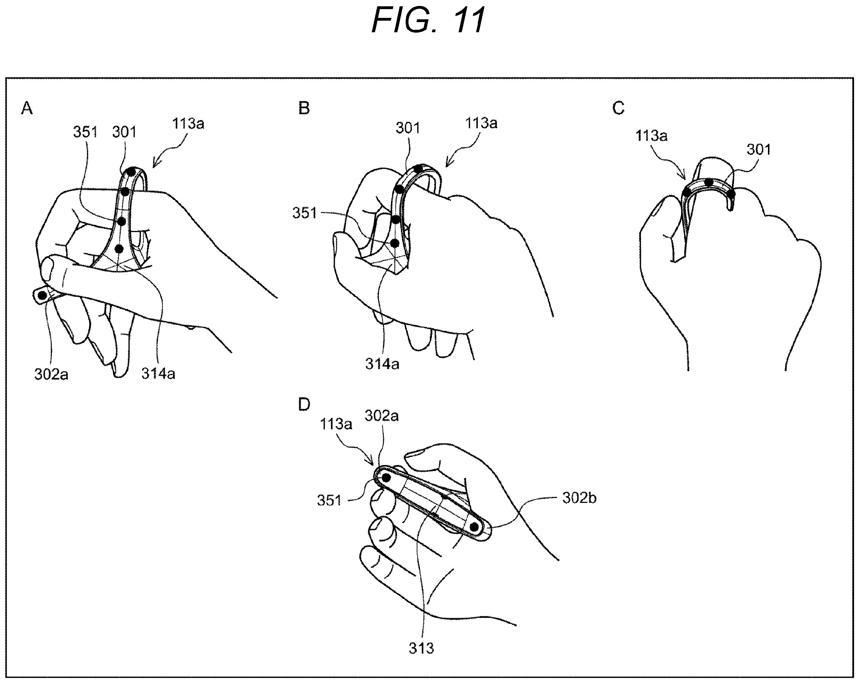

Therefore, as illustrated in A to D of Fig. 11, in any orientation of the controller device 113a, at least a part of the marker 351 becomes visible without being covered by the user's hand.

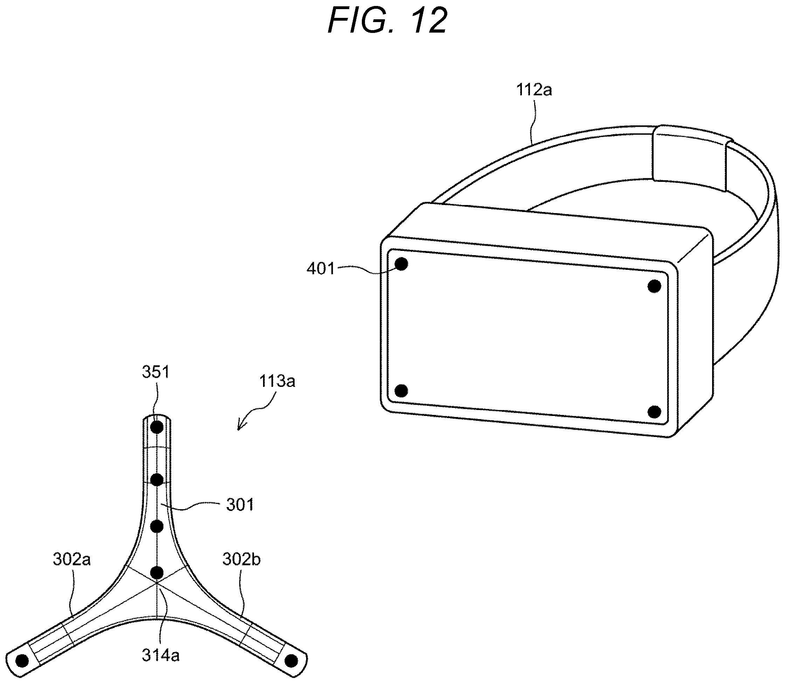

On the other hand, for example, as illustrated in Fig. 12, the terminal apparatus 112 includes a plurality of cameras 401. Each camera 401 constitutes the sensing unit 252 (Fig. 4) of the terminal apparatus 112. Each camera 401 captures an image of the controller device 113a. The terminal apparatus 112 transmits, to the information processing apparatus 111, sensing data including captured image data obtained by imaging.

On the other hand, the control unit 202 of the information processing apparatus 111 receives the sensing data. The recognition unit 221 of the control unit 202 recognizes the position and orientation of the controller device 113a with respect to the terminal apparatus 112 on the basis of the light emission pattern of the marker 351 of the controller device 113a.

Note that, for example, as illustrated in B of Fig. 10, the markers 351 may be arranged in two rows in the lateral direction so as to surround the outer periphery of the ring portion 301. Furthermore, for example, as illustrated in C of Fig. 10, the markers 351 may be arranged in three rows in the lateral direction so as to surround the outer periphery of the ring portion 301.

In this manner, the controller device 113a can be reduced in size by arranging the markers 351 on the outer periphery of the ring portion 301.

### <Example of internal structure of controller device 113a>

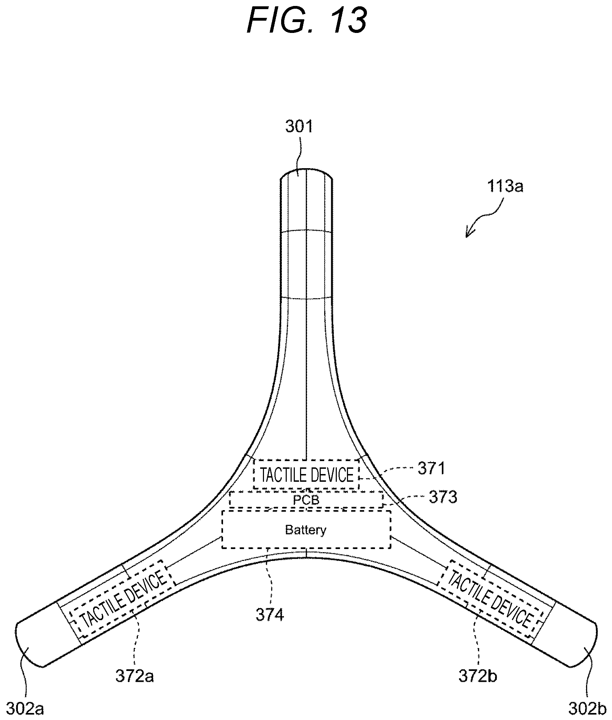

Next, an example of an internal structure of the controller device 113a will be described with reference to Fig. 13.

The controller device 113a incorporates a tactile device 371, a tactile device 372a, a tactile device 372b, a substrate 373, and a battery 374.

Each of the tactile device 371, the tactile device 372a, and the tactile device 372b includes, for example, a device that presents (transmits) a tactile stimulus such as vibration of a linear resonant actuator (LRA), an eccentric rotating mass (ERM), a piezoelectric element, or the like.

The tactile device 371 is arranged near the lower end of the inner peripheral surface 311 of the ring portion 301 (near the operation member 331 (Fig. 9)), and presents a tactile stimulus to the vicinity of the lower end of the inner peripheral surface 311.

The tactile device 372a is arranged near the tip in the operation portion 302a (near the operation member 332a (Fig. 9)), and transmits a tactile stimulus to the vicinity of the tip of the operation portion 302a.

The tactile device 372b is arranged near the tip in the holding portion 302b (near the operation member 332b (Fig. 9)), and transmits a tactile stimulus to the vicinity of the tip of the holding portion 302b.

The substrate 373 is a substrate for controlling the controller device 113a, and is arranged substantially at the center in the controller device 113a and below the tactile device 371.

The battery 374 is arranged below the substrate 373 in the controller device 113a and supplies power to each unit of the controller device 113a.

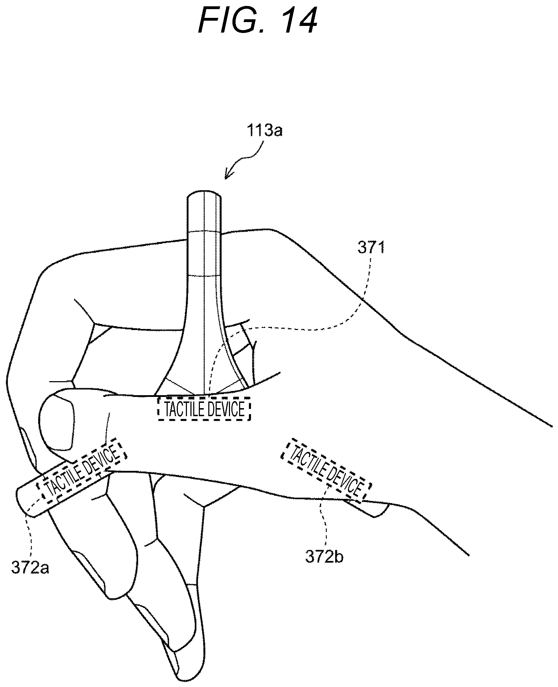

For example, as illustrated in Fig. 14, in a case where the controller device 113a is grasped in the forward direction by the right hand of the user, the tactile stimulus is presented near the base node of the thumb by the tactile device 371. The tactile stimulus is presented near the fingertip of the thumb and near the fingertip of the index finger by the tactile device 372a. The tactile stimulus is presented near the base of the thumb and the palm by the tactile device 372b.

Note that the tactile device 371, the tactile device 372a, and the tactile device 372b are arranged at symmetrical positions about the ring portion 301 in the front-rear direction of the controller device 113a. Therefore, even if the user holds the controller device 113a in either the front or rear direction, a similar tactile stimulus is presented to the user's hand.

### <Processing of XR system 101>

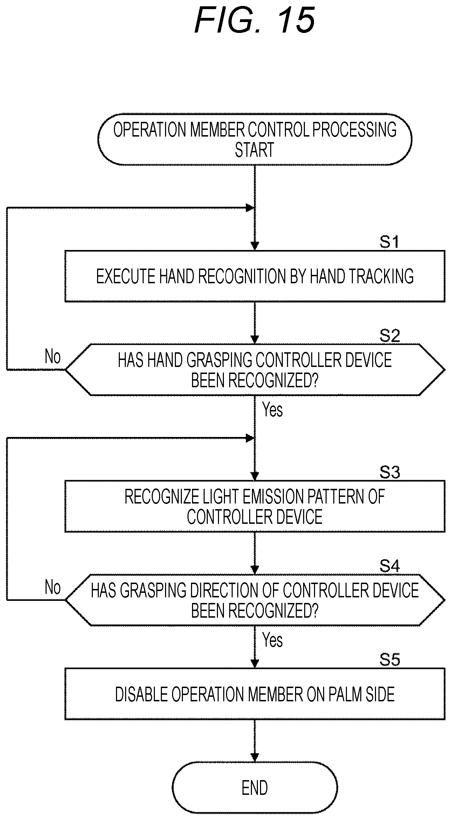

Next, processing of the XR system 101 will be described with reference to Figs. 15 to 23.

### <Operation member control processing>

First, operation member control processing executed by the XR system 101 will be described with reference to a flowchart of Fig. 15.

This processing is executed, for example, when the user holds or switches the controller device 113a.

In step S1, the information processing apparatus 111 executes hand recognition by hand tracking.

For example, the control unit 253 of the terminal apparatus 112 transmits, to the information processing apparatus 111, sensing data including captured image data indicating an image captured by each camera 401.

On the other hand, the control unit 202 of the information processing apparatus 111 receives the sensing data. The recognition unit 221 of the control unit 202 executes hand recognition by hand tracking on the basis of the captured image data included in the sensing data. Therefore, for example, the recognition unit 221 tracks the user's hand grasping the controller device 113a on the basis of the marker 351 provided in the controller device 113a.

In step S2, the recognition unit 221 determines whether or not a hand grasping the controller device 113a has been recognized on the basis of the result of the processing in step S1. In a case where it is determined that the hand grasping the controller device 113a is not recognized, the processing returns to step S1.

Thereafter, the processing of steps S1 and S2 is repeatedly executed until it is determined in step S2 that the hand grasping the controller device 113a is recognized.

On the other hand, in a case where it is determined in step S2 that the hand grasping the controller device 113a is recognized, the processing proceeds to step S3.

In step S3, the recognition unit 221 recognizes the light emission pattern of the controller device 113a on the basis of the captured image data. That is, the recognition unit 221 recognizes the light emission pattern by the markers 351 not hidden by the user's hand in the controller device 113a.

In step S4, the recognition unit 221 determines whether or not the grasping direction of the controller device 113a has been recognized. Specifically, the recognition unit 221 attempts to recognize the grasping direction of the controller device 113a on the basis of the recognition result of the hand of the user grasping the controller device 113a and the recognition result of the light emission pattern of the controller device 113a. Then, in a case where it is determined that the grasping direction of the controller device 113a has not been recognized, the processing returns to step S3.

Thereafter, the processing of steps S3 and S4 is repeatedly executed until it is determined in step S4 that the grasping direction of the controller device 113a is recognized.

On the other hand, in a case where it is determined in step S4 that the grasping direction of the controller device 113a is recognized, the processing proceeds to step S5.

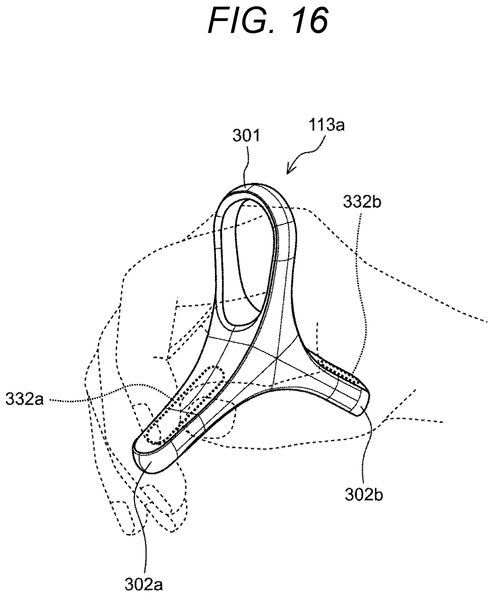

In step S5, the operation control unit 222 disables the operation member on the palm side. For example, as illustrated in Fig. 16, in a case where the controller device 113a is grasped in the forward direction, the operation member 332b on the palm side is disabled. Thereafter, for example, the recognition unit 221 and the operation control unit 222 ignore the operation input signal of the operation member 332b.

On the other hand, for example, in a case where the controller device 113a is grasped in the rearward direction, the operation member 332a on the palm side is disabled.

Thereafter, the operation member control processing ends.

Therefore, it is prevented that the operation member 332 is erroneously operated by the palm of the user.

As described above, the hand grasping the controller device 113a and the grasping direction are recognized, and the operability of the controller device 113a does not change regardless of the grasping direction of the controller device 113a.

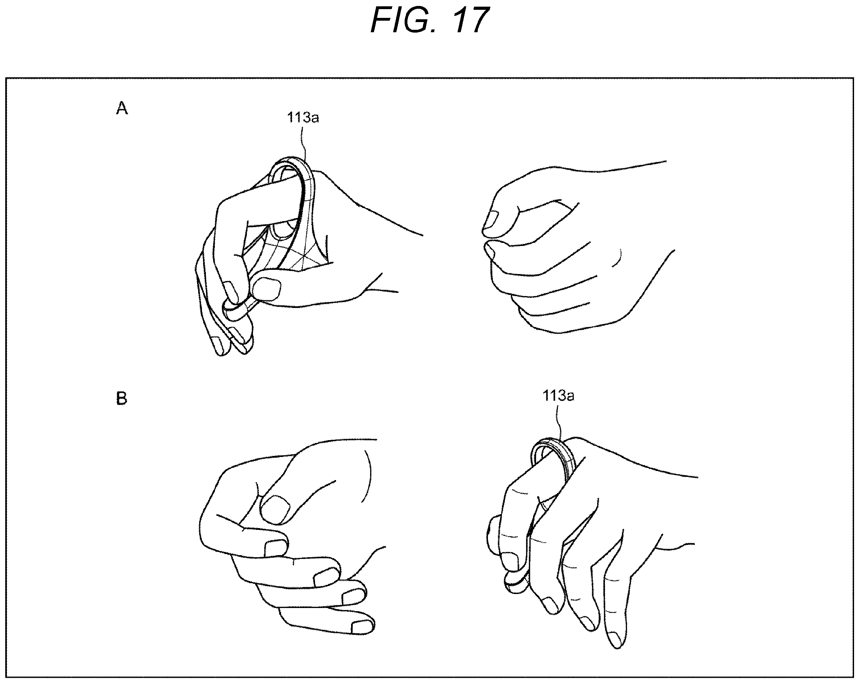

Therefore, for example, as illustrated in A and B of Fig. 17, even if no special setting is made on the terminal apparatus 112 side, the user can grasp and use the controller device 113a with the dominant hand regardless of which hand of the user is dominant.

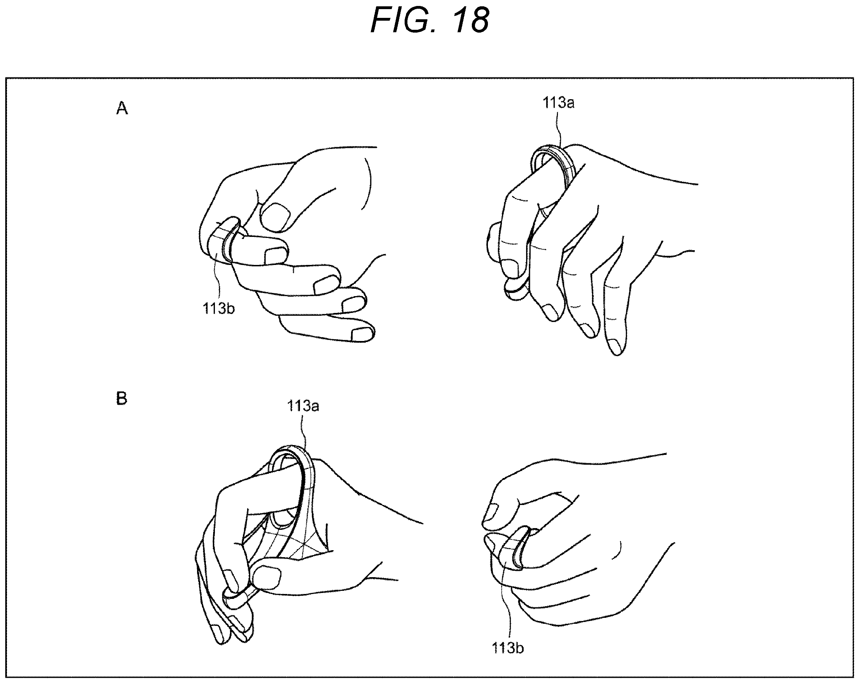

Note that, for example, as illustrated in A and B of Fig. 18, the user can wear another controller device 113b such as a ring-shaped device on the non-dominant hand side to use.

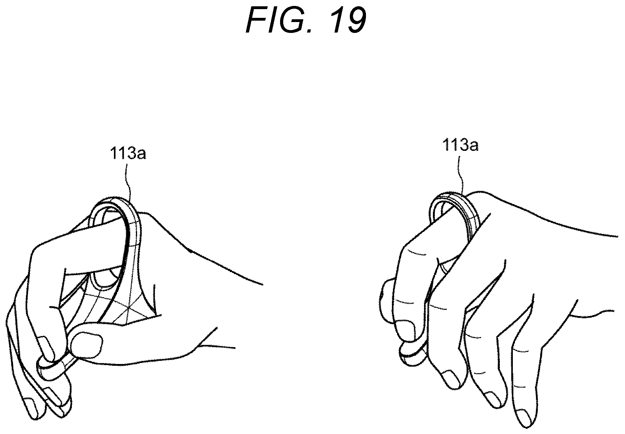

Furthermore, for example, as illustrated in Fig. 19, the user can wear the controller devices 113a on both hands to use.

### <Tactile feedback control processing>

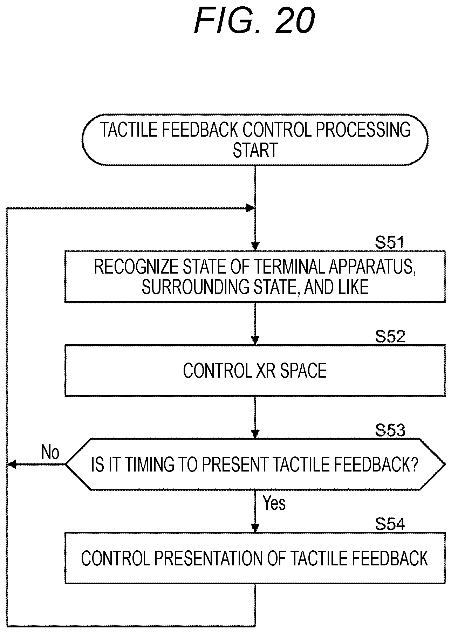

Next, tactile feedback control processing executed by the XR system 101 will be described with reference to a flowchart of Fig. 20.

This processing is started when the power of the information processing apparatus 111 is turned on, and ends when the power is turned off, for example.

In step S51, the information processing apparatus 111 recognizes the state of the terminal apparatus 112, the surrounding state, and the like.

Specifically, the sensing unit 252 of the terminal apparatus 112 senses the state of the terminal apparatus 112 and the state around the terminal apparatus 112, and supplies, to the control unit 253, sensing data indicating a sensing result. The control unit 253 transmits the sensing data to the information processing apparatus 111.

On the other hand, the control unit 202 of the information processing apparatus 111 receives the sensing data.

The controller device 113a transmits a controller signal including an operation input signal indicating operation content for each operation member, to the information processing apparatus 111 via the terminal apparatus 112.

On the other hand, the control unit 202 of the information processing apparatus 111 receives the controller signal.

The recognition unit 221 of the control unit 202 recognizes the state of the terminal apparatus 112, the state around the terminal apparatus 112, the state of the controller device 113, the state of the user, the user operation, and the like on the basis of the sensing data and the controller signal. For example, the recognition unit 221 recognizes the position and orientation of the terminal apparatus 112. For example, the recognition unit 221 recognizes the line-of-sight direction of the user. For example, the recognition unit 221 recognizes the position and orientation of the controller device 113a with respect to the terminal apparatus 112. For example, the recognition unit 221 recognizes operation content for the controller device 113a.

In step S52, the space control unit 223 of the information processing apparatus 111 controls the XR space. Specifically, the space control unit 223 generates a virtual object to be displayed in the XR space on the basis of at least a part of the recognition result by the recognition unit 221, and performs various calculations necessary for construction, display, and the like of the XR space such as the behavior of the virtual object. The space control unit 223 generates display control information for controlling the display of the XR space on the basis of the calculation result and transmits the display control information to the terminal apparatus 112 via the communication unit 205, thereby controlling the display of the XR space by the terminal apparatus 112.

The recognition unit 221 recognizes the type, position, orientation, and the like of the virtual object around the terminal apparatus 112 (user) on the basis of the information and the like from the space control unit 223.

In step S53, the tactile presentation control unit 225 determines whether or not it is a timing to present tactile feedback on the basis of at least one of the recognition result by the recognition unit 221 or the information from the space control unit 223. In a case where it is determined that it is not the timing to present the tactile feedback, the processing returns to step S51.

Thereafter, the processing of steps S51 to S53 is repeatedly executed until it is determined in step S53 that it is the timing to present the tactile feedback.

On the other hand, in a case where it is determined in step S53 that it is the timing to present the tactile feedback, the processing proceeds to step S54.

In step S54, the information processing apparatus 111 controls presentation of the tactile feedback. Specifically, the tactile presentation control unit 225 generates tactile control information for causing the controller device 113a to present a tactile stimulus. The tactile presentation control unit 225 transmits a tactile control signal to the controller device 113a via the terminal apparatus 112.

On the other hand, the controller device 113a receives the tactile control information. Each tactile device of the controller device 113a presents a tactile stimulus on the basis of the tactile control information.

Thereafter, the processing returns to step S51, and the processing in step S51 and the subsequent steps is executed.

As described above, the tactile stimulus is appropriately presented to the user by the controller device 113a.

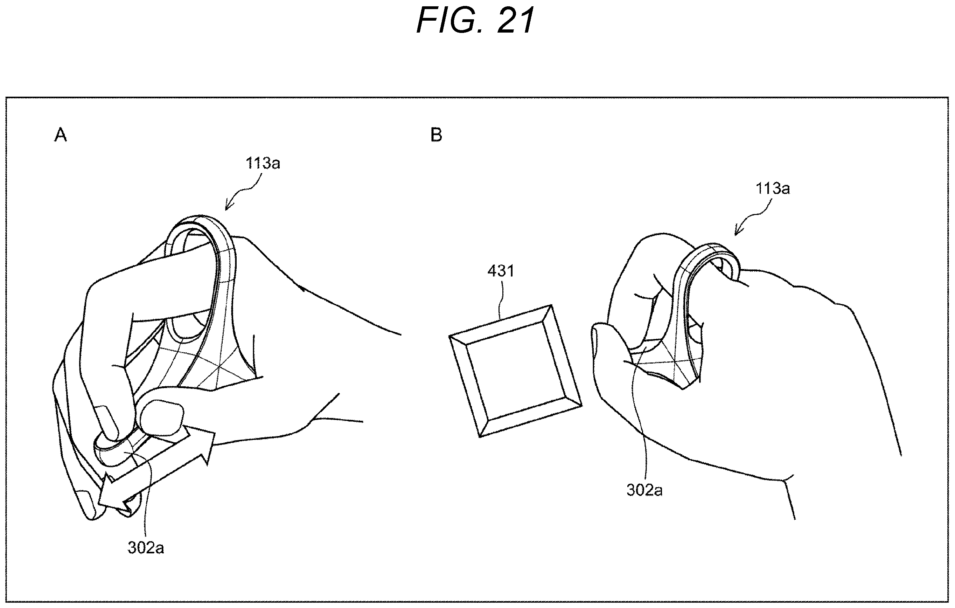

Here, an example of a method of presenting the tactile feedback of the controller device 113a will be described with reference to Figs. 21 to 23.

For example, in a case where the operation member 332a (Fig. 9) in the vicinity of the tip of the operation portion 302a of the controller device 113a includes a touch pad, and the fingertip of the index finger slides on the operation member 332a in the front-rear direction by as illustrated in A of Fig. 21, a tactile stimulus is presented to the fingertip of the index finger by the tactile device 372a (Fig. 13) arranged the vicinity of the operation member 332a.

For example, as illustrated in B of Fig. 21, in a case where the user touches a button 431 in the XR space with the tip of the operation portion 302a of the controller device 113a, a tactile stimulus is presented to the fingertip of the index finger by the tactile device 372a (Fig. 13).

For example, in a case where the controller device 113a or the hand grasping the controller device 113a collides with a virtual object in the XR space, an impact due to the collision is expressed using each tactile device of the controller device 113a.

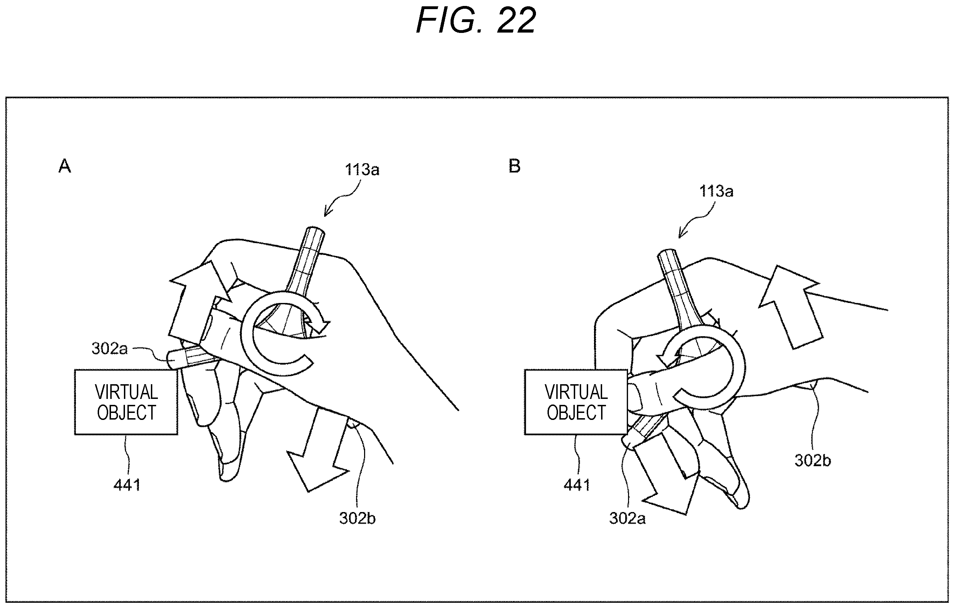

For example, A of Fig. 22 illustrates an example of a case where the tip of the operation portion 302a of the controller device 113a collides with a virtual object 441 in the XR space from above. In this case, for example, upward vibration is presented by the tactile device 372a (Fig. 13) in the vicinity of the tip of the operation portion 302a, and downward vibration is presented by the tactile device 372b (Fig. 13) in the vicinity of the tip of the holding portion 302b. Therefore, it is possible to make the user feel rotational force (moment) in the upward direction with respect to the controller device 113a.

For example, B of Fig. 22 illustrates an example of a case where the tip of the operation portion 302a of the controller device 113a collides with the virtual object 441 in the XR space from below. In this case, for example, downward vibration is presented by the tactile device 372a (Fig. 13) in the vicinity of the tip of the operation portion 302a, and upward vibration is presented by the tactile device 372b (Fig. 13) in the vicinity of the tip of the holding portion 302b. Therefore, it is possible to make the user feel rotational force (moment) in the downward direction with respect to the controller device 113a.

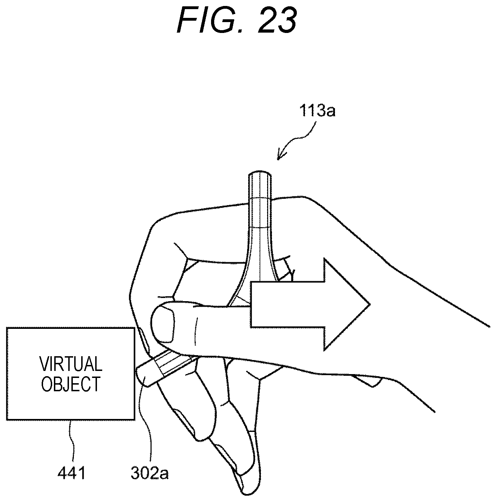

For example, Fig. 23 illustrates an example of a case where the tip of the operation portion 302a of the controller device 113a collides with the virtual object 441 in the XR space from the front. In this case, for example, the entire controller device 113a is vibrated by vibrating the tactile device 371 (Fig. 13) in the vicinity of the center of the controller device 113a. Therefore, the user can be made feel reaction force from the virtual object 441 with respect to the controller device 113a.

As described above, the operability of the controller device 113a can be improved. As a result, operability with respect to the XR space is improved.

### <<2. Modifications>>

Hereinafter, modifications of the embodiments of the present technology described above will be described.

### <Modification regarding controller device 113a>

In the above description, an example has been described in which the controller device 113a can be grasped in either the forward direction or the rear direction. However, for example, it is also possible to set the controller device so as to be grasped only in the forward direction.

In this case, the operation portion 302a and the holding portion 302b do not necessarily have symmetrical shapes about the ring portion 301, and for example, the operation portion 302a and the holding portion 302b may have different shapes. Furthermore, the operation member 332b and the operation member 333b of the holding portion 302b can be removed.

For example, a material, such as metal, other than resin can be used for the controller device 113a.

### <Modification regarding sharing of processing>

For example, a part of the processing of the information processing apparatus 111 may be executed by the terminal apparatus 112.

For example, the terminal apparatus 112 may execute all or part of the processing of the information processing unit 211 of the information processing apparatus 111. For example, the terminal apparatus 112 may independently present the XR space without being controlled by the information processing apparatus 111. For example, the information processing apparatus 111 and the terminal apparatus 112 may independently share and execute processing such as construction of the XR space.

### <Other modifications>

For example, the controller device 113a can be used for an operation not only in the XR space but also in a two-dimensional space and a three-dimensional space such as a game.

### <<3. Others>>

### <Configuration example of computer>

The above-described series of processing can be executed by hardware and can also be executed by software. In a case where the series of processing is executed by software, a program constituting the software is installed in a computer. Here, examples of the computer include a computer incorporated in dedicated hardware, and for example, a general-purpose personal computer that can execute various functions by installing various programs.

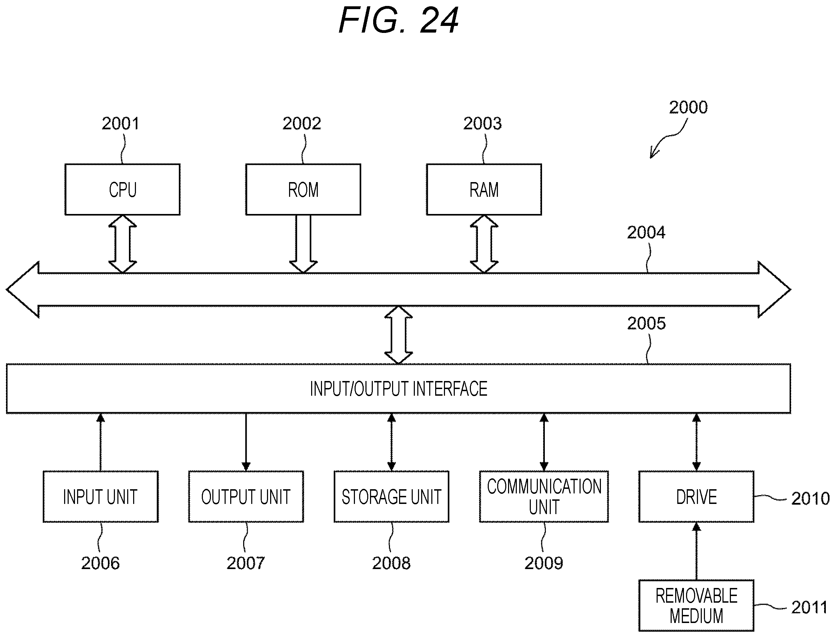

Fig. 24 is a block diagram illustrating a configuration example of the hardware of the computer which executes the above-described series of processing by the program.

In a computer 2000, a central processing unit (CPU) 2001, a read only memory (ROM) 2002, and a random access memory (RAM) 2003 are mutually connected by a bus 2004.

An input/output interface 2005 is further connected to the bus 2004. An input unit 2006, an output unit 2007, a storage unit 2008, a communication unit 2009, and a drive 2010 are connected to the input/output interface 2005.

The input unit 2006 includes an input switch, a button, a microphone, an image sensor, and the like. The output unit 2007 includes a display, a speaker, and the like. The storage unit 2008 includes a hard disk, a nonvolatile memory, and the like. The communication unit 2009 includes a network interface and the like. The drive 2010 drives a removable medium 2011 such as a magnetic disk, an optical disk, a magneto-optical disk, or a semiconductor memory.

In the computer 2000 configured as described above, the series of processing described above is performed, for example, by the CPU 2001 loading a program stored in the storage unit 2008 into the RAM 2003 via the input/output interface 2005 and the bus 2004, and executing the program.

The program executed by the computer 2000 (the CPU 2001) can be provided by being recorded on, for example, the removable medium 2011 as a package medium or the like. Furthermore, the program can be provided via a wired or wireless transmission medium such as a local area network, the Internet, or digital satellite broadcasting.

In the computer 2000, the program can be installed in the storage unit 2008 via the input/output interface 2005 by mounting the removable medium 2011 on the drive 2010. Furthermore, the program can be received by the communication unit 2009 via a wired or wireless transmission medium, and be installed into the storage unit 2008. Other than the above, the program can be installed beforehand into the ROM 2002 or the storage unit 2008.

Note that the program executed by the computer may be a program in which processing is performed in time series in the order described in the present specification or may be a program in which processing is performed in parallel or at necessary timing such as when a call is made.

Furthermore, in the present specification, a system means an assembly of a plurality of components (apparatuses, modules (parts), and the like), and it does not matter whether or not all the components are in the same casing. Therefore, a plurality of apparatuses housed in separate casings and connected to each other via a network and one apparatus in which a plurality of modules is housed in one housing are both systems.

Moreover, embodiments of the present technology are not limited to the embodiment described above, and various modifications can be made without departing from the scope of the present technology.

For example, the present technology may be embodied in cloud computing in which one function is shared and executed by a plurality of apparatuses via a network.

Furthermore, each step described in the flowchart described above can be performed by one apparatus or can be shared and performed by a plurality of apparatuses.

Moreover, in a case where a plurality of processes is included in one step, the plurality of processes included in the one step may be performed by one apparatus, or may be performed by a plurality of apparatuses in a shared manner.

### <Combination examples of configurations>

The present technology can also be configured as follows.

(1) An input device including:
   a ring portion into which a finger is inserted;
   an operation portion that is operable by the finger inserted into the ring portion in a first direction; and
   a holding portion that is held by a palm in a case where the operation portion is operated by the finger.
(2) The input device according to (1), in which
   the operation portion and the holding portion have a symmetrical shape about the ring portion as viewed from a direction of a side surface of the ring portion.
(3) The input device according to (2), in which
   the holding portion is operable by the finger inserted into the ring portion in a second direction opposite to the first direction, and
   the operation portion is held by the palm of the hand in a case where the holding portion is operated by the finger.
(4) The input device according to (3), further including:
   a first operation member arranged near a tip of the operation portion; and
   a second operation member arranged near a tip of the holding portion.
(5) The input device according to (4), further including:
   a first tactile device arranged near the first operation member; and
   a second tactile device arranged near the second operation member.
(6) The input device according to (4) or (5), further including:
   an operation member that is arranged symmetrically about the ring portion on a surface formed by a lower surface of the operation portion and a lower surface of the holding portion.
(7)
   The input device according to any one of (4) to (6), in which
   the operation portion and the holding portion present a tactile stimulus.
(8) The input device according to any one of (4) to (7), further including:
   a plurality of markers, in which
   some of the markers are arranged along an outer periphery of the ring portion, and
   some of the markers are arranged on both side surfaces of the operation portion and both side surfaces of the holding portion.
(9) The input device according to (8), in which
   some of the markers are arranged on a surface formed by a lower surface of the operation portion and a lower surface of the holding portion.
(10) The input device according to any one of (2) to (9), in which
   in a case where a tip of the ring portion is directed upward, the operation portion extends in the first direction and an obliquely downward direction from a vicinity of a lower end of the ring portion, and the holding portion extends in a second direction opposite to the first direction and an obliquely downward direction from the vicinity of the lower end of the ring portion.
(11) The input device according to any one of (1) to (10), further including:
   an operation member that is arranged near a lower end of a hole of the ring portion.
(12) The input device according to (11), further including:
   a tactile device that is arranged near the operation member.
(13) The input device according to any one of (1) to (12), in which
   the operation portion includes an inclined surface that is inclined in the first direction and in an obliquely downward direction from a vicinity of a lower end of the ring portion in a case where a tip of the ring portion is directed upward, the input device further including:
   an operation member that is arranged on the inclined surface.
(14) The input device according to (13), further including:
   a tactile device that is arranged near the operation member.
(15) A control apparatus including:
   a recognition unit that recognizes a position and an orientation of an input device including a ring portion into which a finger of a hand of a user is inserted, an operation portion that is operable by the finger inserted into the ring portion in a first direction, and a holding portion that is held by a palm of the hand in a case where the operation portion is operated by the finger; and
   an operation control unit that controls an operation by the input device on the basis of the position and the orientation of the input device.
(16) The control apparatus according to (15), in which
   the operation portion and the holding portion have a symmetrical shape about the ring portion as viewed from a direction of a side surface of the ring portion,
   the holding portion is operable by the finger inserted into the ring portion in a second direction opposite to the first direction,
   the operation portion is held by the palm of the hand in a case where the holding portion is operated by the finger,
   the recognition unit recognizes a direction in which the input device is grasped, and
   the operation control unit controls an operation for the operation portion and the holding portion on the basis of the direction in which the input device is grasped.
(17) The control apparatus according to (15) or (16), in which
   the recognition unit recognizes an operation content by the input device on the basis of at least one of an operation input signal output from the input device or the position and the orientation of the input device.
(18) The control apparatus according to (17), further including:
   a tactile presentation control unit that controls presentation of a tactile stimulus by the input device on the basis of the operation content.
(19) A control method including:
   recognizing a position and an orientation of an input device including a ring portion into which a finger of a hand of a user is inserted, an operation portion that is operable by the finger inserted into the ring portion in a first direction, and a holding portion that is held by a palm of the hand in a case where the operation portion is operated by the finger; and
   controlling an operation by the input device on the basis of the position and the orientation of the input device.
(20) An information processing apparatus, in which
   an operation input signal is input which is output from an input device including a ring portion into which a finger is inserted, an operation portion that is operable by the finger inserted into the ring portion, and a holding portion that is held by a palm in a case where the operation portion is operated by the finger, and
   display control information for controlling display of an XR space on the basis of the operation input signal is output.
(21) An information processing apparatus including:
   a control unit that receives input information indicating at least one of a state of a terminal apparatus that presents an XR space to a user, a state around the terminal apparatus, a state of the user, a behavior of the user, or an operation input to an input device used for an operation input of the XR space, executes an application on the basis of the input information, and outputs output information for controlling display of a virtual object including computer aided design (CAD) information in the XR space.
(22) An information processing method including:
   by an information processing apparatus,
   receiving input information indicating at least one of a state of a terminal apparatus that presents an XR space to a user, a state around the terminal apparatus, a state of the user, a behavior of the user, or an operation input to an input device used for an operation input of the XR space;
   executing an application on the basis of the input information; and
   outputting output information for controlling display of a virtual object including CAD information in the XR space.
(23) An information processing apparatus including:
   a control unit that executes an application for presenting an XR space to a user and outputs output information indicating a change or abnormality of a state of the application to a terminal apparatus that presents the XR space to the user or an input device used for an operation input of the XR space.
(24) An information processing method including:
   by an information processing apparatus,
   executing an application for presenting an XR space to a user; and
   outputting output information indicating a change or abnormality of a state of the application to a terminal apparatus that presents the XR space to the user or an input device used for an operation input of the XR space.

Note that the effects described in the present specification are merely examples and are not limited, and other effects may be achieved.

### REFERENCE SIGNS LIST

101 XR system
111 Information processing apparatus
112 Terminal apparatus
113, 113a, 113b Controller device
202 Control unit
203 Display unit
211 Information processing unit
221 Recognition unit
222 Operation control unit
223 Space control unit
224 Audio control unit
225 Tactile presentation control unit
226 Learning unit
252 Sensing unit
253 Control unit
254 Display unit
255 Audio output unit
301 Ring portion
301A Hole
302a Operation portion
302b Holding portion
312a, 312b Upper surface
313 Bottom surface
331 to 334 Operation member
351 Marker
371 to 372b Tactile device
401 Camera

## Claims

1. An input device comprising:
a ring portion into which a finger is inserted;
an operation portion that is operable by the finger inserted into the ring portion in a first direction; and
a holding portion that is held by a palm in a case where the operation portion is operated by the finger.

2. The input device according to claim 1, wherein
the operation portion and the holding portion have a symmetrical shape about the ring portion as viewed from a direction of a side surface of the ring portion.

3. The input device according to claim 2, wherein
the holding portion is operable by the finger inserted into the ring portion in a second direction opposite to the first direction, and
the operation portion is held by the palm of the hand in a case where the holding portion is operated by the finger.

4. The input device according to claim 3, further comprising:
a first operation member arranged near a tip of the operation portion; and
a second operation member arranged near a tip of the holding portion.

5. The input device according to claim **4,** further comprising:
a first tactile device arranged near the first operation member; and
a second tactile device arranged near the second operation member.

6. The input device according to claim 4, further comprising:
an operation member that is arranged symmetrically about the ring portion on a surface formed by a lower surface of the operation portion and a lower surface of the holding portion.

7. The input device according to claim 4, wherein
the operation portion and the holding portion present a tactile stimulus.

8. The input device according to claim 4, further comprising:
a plurality of markers, wherein
some of the markers are arranged along an outer periphery of the ring portion, and
some of the markers are arranged on both side surfaces of the operation portion and both side surfaces of the holding portion.

9. The input device according to claim 8, wherein
some of the markers are arranged on a surface formed by a lower surface of the operation portion and a lower surface of the holding portion.

10. The input device according to claim 2, wherein
in a case where a tip of the ring portion is directed upward, the operation portion extends in the first direction and an obliquely downward direction from a vicinity of a lower end of the ring portion, and the holding portion extends in a second direction opposite to the first direction and an obliquely downward direction from the vicinity of the lower end of the ring portion.

11. The input device according to claim 1, further comprising:
an operation member that is arranged near a lower end of a hole of the ring portion.

12. The input device according to claim 11, further comprising:
a tactile device that is arranged near the operation member.

13. The input device according to claim 1, wherein
the operation portion includes an inclined surface that is inclined in the first direction and in an obliquely downward direction from a vicinity of a lower end of the ring portion in a case where a tip of the ring portion is directed upward, the input device further comprising:
an operation member that is arranged on the inclined surface.

14. The input device according to claim 13, further comprising:
a tactile device that is arranged near the operation member.

15. A control apparatus comprising:
a recognition unit that recognizes a position and an orientation of an input device including a ring portion into which a finger of a hand of a user is inserted, an operation portion that is operable by the finger inserted into the ring portion in a first direction, and a holding portion that is held by a palm of the hand in a case where the operation portion is operated by the finger; and
an operation control unit that controls an operation by the input device on a basis of the position and the orientation of the input device.

16. The control apparatus according to claim 15, wherein
the operation portion and the holding portion have a symmetrical shape about the ring portion as viewed from a direction of a side surface of the ring portion,
the holding portion is operable by the finger inserted into the ring portion in a second direction opposite to the first direction,
the operation portion is held by the palm of the hand in a case where the holding portion is operated by the finger,
the recognition unit recognizes a direction in which the input device is grasped, and
the operation control unit controls an operation for the operation portion and the holding portion on a basis of the direction in which the input device is grasped.

17. The control apparatus according to claim 15, wherein
the recognition unit recognizes an operation content by the input device on a basis of at least one of an operation input signal output from the input device or the position and the orientation of the input device.

18. The control apparatus according to claim 17, further comprising:
a tactile presentation control unit that controls presentation of a tactile stimulus by the input device on a basis of the operation content.

19. A control method comprising:
recognizing a position and an orientation of an input device including a ring portion into which a finger of a hand of a user is inserted, an operation portion that is operable by the finger inserted into the ring portion in a first direction, and a holding portion that is held by a palm of the hand in a case where the operation portion is operated by the finger; and
controlling an operation by the input device on a basis of the position and the orientation of the input device.

20. An information processing apparatus, wherein
an operation input signal is input which is output from an input device including a ring portion into which a finger is inserted, an operation portion that is operable by the finger inserted into the ring portion, and a holding portion that is held by a palm in a case where the operation portion is operated by the finger, and
display control information for controlling display of an XR space on a basis of the operation input signal is output.

21. An information processing apparatus comprising:
a control unit that receives input information indicating at least one of a state of a terminal apparatus that presents an XR space to a user, a state around the terminal apparatus, a state of the user, a behavior of the user, or an operation input to an input device used for an operation input of the XR space, executes an application on a basis of the input information, and outputs output information for controlling display of a virtual object including computer aided design (CAD) information in the XR space.

22. An information processing method comprising:
by an information processing apparatus,
receiving input information indicating at least one of a state of a terminal apparatus that presents an XR space to a user, a state around the terminal apparatus, a state of the user, a behavior of the user, or an operation input to an input device used for an operation input of the XR space;
executing an application on a basis of the input information; and
outputting output information for controlling display of a virtual object including CAD information in the XR space.

23. An information processing apparatus comprising:
a control unit that executes an application for presenting an XR space to a user and outputs output information indicating a change or abnormality of a state of the application to a terminal apparatus that presents the XR space to the user or an input device used for an operation input of the XR space.

24. An information processing method comprising:
by an information processing apparatus,
executing an application for presenting an XR space to a user; and
outputting output information indicating a change or abnormality of a state of the application to a terminal apparatus that presents the XR space to the user or an input device used for an operation input of the XR space.
